# EUROPÄISCHE PATENTSCHRIFT

(11) **EP 3 619 515 B1**
(45) Veröffentlichungstag und Bekanntmachung des Hinweises auf die Patenterteilung: **24.07.2024**
(21) Anmeldenummer: 18710861.8
(22) Anmeldetag: 12.03.2018
(51) Int. Cl.: G01N 1/28, B29C 43/56, G01N 1/36, B29C 43/36

(54) **EINBETTPRESSE, ABSAUGEINRICHTUNG FÜR EINE EINBETTPRESSE UND MODULARES EINBETTPRESSENSYSTEM**
MOUNTING PRESS, ASPIRATION DEVICE FOR A MOUNTING PRESS, AND MODULAR MOUNTING PRESS SYSTEM
PRESSE D'ENROBAGE, DISPOSITIF D'ASPIRATION POUR PRESSE D'ENROBAGE ET SYSTÈME DE PRESSE D'ENROBAGE MODULAIRE

(30) Priorität: 05.05.2017 DE 102017109677
(43) Veröffentlichungstag der Anmeldung: 11.03.2020
(60) Teilanmeldung: 24179899.0
(73) Patentinhaber: ATM Qness GmbH, 57636 Mammelzen (DE)
(72) Erfinder: BONGARTZ, Jochen, 57629 Limbach (DE)
(74) Vertreter: Blumbach · Zinngrebe Patentanwälte PartG mbB
(86) Internationale Anmeldenummer: PCT/EP2018/056037
(87) Internationale Veröffentlichungsnummer: WO 2018/202342

(56) Entgegenhaltungen:
- EP-A1- 3 072 660
- TW-A- 201 545 830
- US-A1- 2015 143 928
- ATM: "Device Catalog", INTERNET CITATION, 1 March 2017 (2017-03-01), pages 1 - 164, XP009505896, Retrieved from the Internet <URL:http://www.metalco.cz/user/related_files/katalog__atm-3.pdf> [retrieved on 20180607]

## Beschreibung

### Gebiet der Erfindung

Die Erfindung betrifft eine Einbettpresse mit einer Absaugeinrichtung, eine Absaugeinrichtung für Einbettpressen sowie ein modulares Einbettpressensystem.

### Hintergrund der Erfindung

Einbettpressen insbesondere für die Warmeinbettung von Proben sind per se bekannt, sie werden verbreitet in der metallographischen oder materialografischen Analyse zur Präparation von Werkstücken für die Beschreibung von Gefügen beispielsweise metallischer Werkstoffe mit Hilfe mikroskopischer Verfahren eingesetzt. Aber auch für die Vorbereitung zur Analyse von Verbundwerkstoffen oder Keramikwerkstoffen werden Einbettpressen eingesetzt, um ein Proben- oder Werkstück vorzubereiten, anhand dessen beispielsweise ein Anschliff präpariert und auflicht- oder elektronenmikroskopisch untersucht werden kann.

Die Einbettung dient dabei grundsätzlich der besseren Handhabung der Proben sowie zum Abstützen der Randzone oder der Infiltration von Rissen, Poren oder Korrosionsbelägen. Es können dabei Einbetthilfen eingesetzt werden, um Proben zu fixieren, beispielsweise in aufrechter Position.

Beispielhafte Einbettpressen der Anmelderin sind z.B. unter dem Namen Opal 410, Opal 460 und Opal 480 bekannt, beschrieben in dem "Device Catalogue" der ATM GmbH Advanced Materialography oder auf www.gatm.de.

Die TW 2015 45830 A zeigt eine Presse mit einem Hebelmechanismus und einem bajonettartigen Verschluss.

In der US 2015/0143928 A1 ist ein Probenverkapselungssystem mit zwei entgegenwirkenden Stößeln beschrieben.

Aufgrund des stetig wachsenden Interesses an materialografischen Analysen von Werkstoffen, beispielsweise für die Untersuchung von Materialversagen oder generell zur Qualitätskontrolle, sowie der Erweiterung des Anwendungsbereichs von Einbettpressen von der reinen Metallographie hin zur Materialographie und der damit in Verbindung stehenden Erhöhung des Probenaufkommens und der intensiveren Nutzung von Einbettpressen besteht ein ständiges Interesse, Einbettpressen technisch beispielsweise hinsichtlich der Bedienergonomie zu verbessern. Aber auch die Arbeitsplatzsicherheit hinsichtlich der Anwendung einer Einbettpresse steht zur Vermeidung von gefährlichen oder gesundheitsschädlichen Einflüssen unter ständiger Verbesserung.

### Allgemeine Beschreibung der Erfindung

Die vorliegende Erfindung hat sich vor diesem Hintergrund die Aufgabe gestellt, eine Einbettpresse für die Einbettung einer Probe, insbesondere für die Warmeinbettung, bereit zu stellen, die eine komfortablere Benutzung der Einbettpresse bereitstellt und lästige oder gar schädliche Stäube und/oder Dämpfe von der Einbettpresse beseitigt. Dies stellt eine Arbeitserleichterung für den Anwender dar und erhöht die Arbeitssicherheit für den Anwender. Sie ist kostengünstig, zuverlässig und langlebig.

Ein weiterer Aspekt der Aufgabe der Erfindung ist es, eine integrierte oder integrierbare Absaugeinrichtung bereit zu stellen, die beispielsweise auch dafür geeignet sein kann, an vorhandene Einbettpressen nachgerüstet zu werden.

Noch ein Aspekt der Aufgabe der Erfindung ist, ein modulares Einbettpressensystem für die parallele Einbettung von Proben, insbesondere für die Warmeinbettung, bereit zu stellen, die eine komfortablere Bedienung der Einbettpresse bereitstellt. Insbesondere hat sich die Erfindung die Aufgabe gestellt, eine Arbeitserleichterung für den Anwender zu realisieren und auch die Arbeitssicherheit zu erhöhen. Sie ist auch durch die Bündelung und Rationalisierung teurer Komponenten kostengünstig, zuverlässig und langlebig.

Die Aufgabe der Erfindung wird durch den Gegenstand der unabhängigen Ansprüche gelöst. Vorteilhafte Weiterbildungen der Erfindung sind in den Unteransprüchen definiert.

Die Erfindung betrifft eine Einbettpresse für die Einbettung einer Probe in Einbettmaterial, typischerweise in Granulat. Es kann dabei eine oder mehrere Proben gleichzeitig in der Einbettpresse verarbeitet werden.

Die Einbettpresse gemäß der Erfindung umfasst einen Einbettzylinder bzw. Presszylinder zur Aufnahme der Probe. Der Einbettzylinder weist eine Hauptzylinderachse und eine Zylinderöffnung auf, wobei die Hauptzylinderachse im Inneren des Einbettzylinders verläuft und durch die Zylinderöffnung hindurchtritt.

Die Einbettpresse umfasst ferner eine sich um die Zylinderöffnung herum erstreckende Abdeckung. Die Abdeckung kann eine plane oder ebene Fläche sein, die insbesondere eine horizontale Haupterstreckungsrichtung aufweist. Die Zylinderöffnung kann in die Abdeckung eingelassen sein. Besonders bevorzugt ist die Abdeckung ein Schlittenträger mit seitlich angeordneten Schlittenaufnahmen, z.B. eine Schiebeführung, zur Aufnahme eines Schiebeverschlusses.

Die erfindungsgemäße Einbettpresse umfasst eine Absaugeinrichtung zur Absaugung beispielsweise von Granulatstaub, Granulat oder Dämpfen, besonders aus dem Bereich um die Zylinderöffnung herum. Beispielsweise ist die Absaugeinrichtung vollständig an der Einbettpresse installiert oder eingebaut. Die Absaugeinrichtung weist einen Unterdruckerzeuger zur Bereitstellung einer Absaugwirkung auf und ist zumindest teilweise an der Abdeckung angebracht oder in die Abdeckung eingelassen oder an der Abdeckung angeschlossen.

Die Abdeckung ist bevorzugt eine Abdeckplatte, in die die Zylinderöffnung eingelassen ist. Die Abdeckung kann auch eine Schlittenführung für einen Schiebeschlitten aufweisen.

Die Absaugeinrichtung kann dann zumindest teilweise in den Schiebeschlitten eingebaut sein. Der abgesaugte Granulatstaub und/oder abgesaugte Dämpfe können in einer solcherart bevorzugten Ausführungsform bevorzugt durch den Schiebeschlitten hindurchgeleitet werden.

In einer weiteren Ausführungsform kann die Absaugeinrichtung um die in die Abdeckplatte eingelassene Zylinderöffnung herum angeordnete Absaugöffnungen in der Abdeckplatte aufweisen.

Ein Unterdruckerzeuger zur Bereitstellung der Saugwirkung kann an der Einbettpresse angeordnet sein.

In einer weiteren Ausführungsform kann ein frontseitiges Granulatfach zur Aufnahme von Granulat angeordnet sein. Hier können beispielsweise überschüssiges Granulat eingebracht werden, welches über die gewünschte oder maximale Füllhöhe des Einbettzylinders hinaus in den Einbettzylinder eingebracht wurde. Es kann sich dabei um die nicht absaugöffnungsgängigen Granulatreste handeln. Besonders bevorzugt werden die Granulatreste von dem Schiebeschlitten in das Granulatfach verbracht, indem der Schiebeschlitten vor Inbetriebnahme oder Einsatz der Einbettpresse auf die Zylinderöffnung geschoben wird. Beim Schiebevorgang werden die Granulatreste hierbei von der Vorderseite des Schiebeschlittens erfasst und über die Abdeckung in das Granulatfach geschoben.

In einer Ausführungsform einer Absaugeinrichtung für eine Einbettpresse, wobei die Einbettpresse einen Einbettzylinder bzw. einen Presszylinder, eine Zylinderöffnung und eine durch den Einbettzylinder verlaufenden Hauptzylinderachse aufweist, kann eine sich um die Zylinderöffnung herum erstreckende Abdeckung und ein Unterdruckerzeuger zur Bereitstellung einer Absaugwirkung bereitgestellt werden. Bei dem Unterdruckerzeuger handelt es sich insbesondere um eine Gebläseeinrichtung.

Ferner weist die Absaugeinrichtung zumindest einen mit dem Unterdruckerzeuger verbundenen Absaugluftkanal auf. In dem Absaugluftkanal wird die Absaugluft zusammen mit den abgesaugten Stäuben, Granulat oder Dämpfen zu dem Unterdruckerzeuger geführt.

Die Absaugeinrichtung weist zumindest eine mit dem Absaugluftkanal verbundene Absaugöffnung auf, die derart benachbart zu der Zylinderöffnung anordenbar ist, dass eine Absaugwirkung im Bereich der Zylinderöffnung erzielbar ist. Die Absaugeinrichtung kann ferner zumindest teilweise an der Abdeckung angebracht oder in die Abdeckung eingearbeitet sein.

In einem weiteren Beispiel kann die Absaugeinrichtung hergerichtet sein, die Absaugwirkung unmittelbar im Bereich der Zylinderöffnung des Einbettzylinders zu entfalten. Hierfür kann die zumindest eine Absaugöffnung seitlich beabstandet von der Zylinderöffnung in die Abdeckung eingelassen sein. Die zumindest eine Absaugöffnung kann auch konzentrisch um die Zylinderöffnung in die Abdeckung eingelassen oder an der Abdeckung angebracht sein.

Die Abdeckung ist bevorzugt eine Abdeckplatte und weist eine Schlittenführung für einen Schiebeschlitten auf.

In einer Absaugeinrichtung mit Schiebeschlitten, der insbesondere in einer Schlittenführung der Abdeckplatte quer zu der Zylinderachse bewegt werden kann, kann die zumindest eine oder eine weitere Absaugöffnung an dem Schiebeschlitten angeordnet sein. Beispielsweise ist die Absaugöffnung an einer Vorderseite des Schiebeschlittens angeordnet, so dass die Absaugeinrichtung eine unmittelbar auf den Bereich der Zylinderöffnung gerichtete Wirkung erzielt, wenn der Schiebeschlitten in einer Absaugposition ist, in welcher die Zylinderöffnung nicht von dem Schiebeschlitten verdeckt ist.

Die zumindest eine Absaugöffnung kann durch den Schiebeschlitten hindurch mit dem Absaugluftkanal verbunden sein. Beispielsweise umfasst der Schiebeschlitten dann zumindest einen Schiebeschlittenkanal, der die zumindest eine Absaugöffnung durch den Schiebeschlitten hindurch mit dem Absaugluftkanal verbindet. Es ist auch ggf. ergänzend möglich, dass der Schiebeschlitten eine Absaugposition aufweist, in welcher die zumindest eine Absaugluftöffnung in kommunizierender Weise durch den Schiebeschlitten hindurch von der Unterdruckeinrichtung mit absaugendem Unterdruck beaufschlagt werden kann.

Der Schiebeschlitten kann eine Einsatzposition aufweisen, in welcher der Schiebeschlitten die Zylinderöffnung abdeckt, das heißt bevorzugt vollständig mit der Zylinderöffnung fluchtend verdeckt.

Die Absaugeinrichtung kann eine Dampfabsaugung bereitstellen, um während des Pressvorgangs der Einbettpresse entstehende Dämpfe abzusaugen. Der Schiebeschlitten kann für diesen Fall so hergerichtet sein, dass die Absaugwirkung im Bereich der Zylinderöffnung in der Einsatzposition des Schiebeschlittens aufgebracht wird. Hierfür kann der Schiebeschlitten Schiebeschlittenkanäle aufweisen, die in der Einsatzposition des Schiebeschlittens in kommunizierender Weise mit dem Absaugluftkanal der Absaugvorrichtung verbunden sind.

Zumindest ein Teil des Absaugluftkanals kann in die Abdeckplatte eingelassen sein, so dass der Absaugluftkanal durch die Abdeckplatte hindurchführt und/oder zumindest ein Stück durch die Abdeckplatte hindurchführt.

Die Absaugeinrichtung kann in einem weiteren Beispiel ferner ein bevorzugt bei dem Unterdruckerzeuger angeordnetes Filterelement aufweisen. Mit einem solchen Filterelement können Granulatstäube, Granulat oder ggf. Dämpfe aus der Absaugluft gefiltert werden. Je nach Ausgestaltung der Absaugeinrichtung kann das Filterelement ggf. hinsichtlich der Filterwirkung, der Maschenweite des Filters ausgewählt werden.

Die Absaugeinrichtung kann in einem Beispiel ferner zumindest eine weitere Einbettpresse mit einer weiteren Zylinderöffnung umfassen, wobei der Unterdruckerzeuger ein gemeinsamer Unterdruckerzeuger ist. Die Absaugeinrichtung ist in diesem Beispiel hergerichtet, die Absaugwirkung unmittelbar im Bereich der Zylinderöffnung des Einbettzylinders und zugleich an der weiteren Zylinderöffnung der zumindest einen weiteren Einbettpresse zu entfalten.

In einem erweiterten Ausführungsbeispiel kann die Einbettpresse mit Absauganlage auch einen Schiebeverschluss aufweisen.

Die Einbettpresse umfasst hierfür einen Einbettzylinder bzw. Presszylinder zur Aufnahme der Probe. Der Einbettzylinder weist eine Hauptzylinderachse und eine Zylinderöffnung auf, wobei die Hauptzylinderachse im Inneren des Einbettzylinders verläuft und durch die Zylinderöffnung hindurchtritt.

Die Einbettpresse umfasst ferner bevorzugt den Schiebeverschluss mit einem Schiebeschlitten, einem Oberkolben und einen mit dem Oberkolben in Wirkzusammenhang stehenden Verschlusshebel. Der Schiebeschlitten ist in einer Richtung quer, insbesondere senkrecht, zur Hauptzylinderachse verschieblich ausgebildet, er wird bevorzugt mittels des Verschlusshebels verschoben. Mit anderen Worten ist der Verschlusshebel handgängig ausgebildet, so dass der Schiebeschlitten des Schiebeverschlusses leicht mittels Greifen des Verschlusshebels in einer Richtung quer zur Hauptzylinderachse verschoben werden kann. Der Schiebeschlitten kann hierdurch in eine Einsatzposition des Schiebeschlittens geführt werden, in welcher der Oberkolben an oder in die Zylinderöffnung des Einbettzylinders geführt werden kann.

Der Verschlusshebel kann hierbei zumindest eine Offenstellung und eine Geschlossenstellung aufweisen und kann, beispielsweise handgängig, von der Offenstellung in die Geschlossenstellung überführt werden. In einer bevorzugten Ausführungsform ist die Überführung des Verschlusshebels von der Offenstellung in die Geschlossenstellung und zurück nur in der Einsatzposition des Schlittens möglich. Hierbei kann eine Raste oder Verschlusshebelsperre vorgesehen sein, um den Verschlusshebel dann zu blockieren, wenn der Schiebeschlitten eine andere Position als die Einsatzposition einnimmt. Der Schiebeschlitten kann dann mittels des Verschlusshebels frei bewegt werden, beispielsweise entlang eines Schlittenträgers, die Überführung des Verschlusshebels von der Offenstellung in die Geschlossenstellung ist jedoch bevorzugt blockiert bzw. nur freigegeben, wenn der Schiebeschlitten in der Einsatzposition ist. Der Verschlusshebel kann auch derart rastend gelagert gestaltet sein, dass die Rastung durch die anschlagende Zugkraft der Hand am Verschlusshebel des Schiebeschlittens überwunden wird um von der Offenstellung in die Geschlossenstellung überführt zu werden.

Der Verschlusshebel wirkt derart mit dem Oberkolben zusammen, dass der Oberkolben mittels Führen des Verschlusshebels von der Offenstellung in die Geschlossenstellung die Zylinderöffnung verschließt, wenn der Schiebeschlitten in der Einsatzposition ist. Der Oberkolben verschließt die Zylinderöffnung dabei insbesondere Kraft aufnehmend bzw. verkniet stützend, wobei in der Probe bzw. beim Herstellen der Probe entstehende Gase und Dämpfe ggf. entweichen können. Mit anderen Worten kann mit dem Verschlusshebel auf einfache Weise die Einbettpresse in Betriebsbereitschaft versetzt werden, indem der Schiebeschlitten in die Einsatzposition verschoben und der Verschlusshebel in die Geschlossenstellung geführt wird.

Die Hauptzylinderachse des Zylinders ist bevorzugt die Zylindermittelachse, also die zentrisch durch den Zylinder entlang der mathematischen Höhenrichtung verlaufende Achse. In der Einsatzposition des Schiebeschlittens tritt dann die Hauptzylinderachse bevorzugt mittig durch den Oberkolben. Mit anderen Worten ist in der Einsatzposition der Oberkolben fluchtend auf die Zylinderöffnung des Einbettzylinders ausgerichtet bzw. mit dem Schiebeschlitten ausrichtbar.

Die Einbettpresse umfasst bevorzugt einen Schlittenträger. Der Schlittenträger ist in einer ersten Ausführung eine ebene oder plane Fläche, entlang oder auf welcher der Schiebeschlitten verschiebbar ist. Die Zylinderöffnung ist bevorzugt in den Schlittenträger eingelassen. Das heißt, der Schlittenträger umgibt die Zylinderöffnung allseits, bevorzugt in einer Ebene in der auch eine Austrittsfläche der Zylinderöffnung liegt. Mit anderen Worten bilden Austrittsfläche der Zylinderöffnung und Schlittenträger eine gemeinsame Ebene. Der Schlittenträger ist damit in seiner Haupterstreckungsrichtung bevorzugt quer zu der Zylinderachse angeordnet, insbesondere ist er senkrecht dazu angeordnet.

Der Schiebeverschluss ist ferner bevorzugt entlang des Schlittenträgers verschiebbar und über der Zylinderöffnung positionierbar.

Die Erfindung betrifft ferner einen Schiebeverschluss für eine Einbettpresse mit einem Einbettzylinder mit einer Zylinderöffnung und einer durch den Einbettzylinder verlaufenden Hauptzylinderachse. Der Schiebeverschluss umfasst einen in dem Schiebeverschluss angeordneten Oberkolben und einen mit dem Oberkolben in Wirkzusammenhang stehenden Verschlusshebel und einen in einer Richtung quer, insbesondere senkrecht, zur Hauptzylinderachse verschieblich ausgebildeten Schiebeschlitten, mit welchem der Oberkolben in einer Einsatzposition des Schiebeschlittens an oder in die Zylinderöffnung des Einbettzylinders geführt werden kann.

Der Oberkolben weist zumindest eine Offenstellung und eine Geschlossenstellung auf und kann von der Offenstellung in die Geschlossenstellung überführt werden. Bevorzugt kann der Oberkolben in der Einsatzposition des Schlittens von der Offenstellung in die Geschlossenstellung überführt werden.

Der Verschlusshebel wirkt derart mit dem Oberkolben zusammen, dass der Oberkolben mittels Führen des Verschlusshebels von der Offenstellung in die Geschlossenstellung gebracht wird und die Zylinderöffnung verschließt, wenn der Schiebeschlitten in der Einsatzposition ist. Mit anderen Worten befindet sich der Verschlusshebel in einer Offenstellung, wenn der Oberkolben die Offenstellung einnimmt, und in einer Geschlossenstellung, wenn der Oberkolben die Geschlossenstellung einnimmt.

Der Verschlusshebel weist bevorzugt eine Verschlusswelle auf. Die Verschlusswelle bildet das Lager bzw. den Drehpunkt des Verschlusshebels, wobei eine Kraftaufbringung beispielsweise durch Handbetätigung des Verschlusshebels über die Verschlusswelle übertragen werden kann, insbesondere auf den Oberkolben zum Verschließen der Einbettpresse.

Der Oberkolben wird mittels Rotationsbewegung des Verschlusshebels um die Verschlusswelle herum von der Offenstellung in die Geschlossenstellung überführt.

Die Verschlusswelle weist ferner bevorzugt ein Exzenterbauteil auf. Das Exzenterbauteil ist beispielsweise auf derselben Achse mit der Verschlusswelle montiert und wird bei Rotation der Verschlusswelle mitrotiert. Alternativ ist die Verschlusswelle eine Exzenterwelle, weist also insbesondere einen Nocken auf und ist somit eine Nockenwelle oder weist allgemein über ihre Erstreckungsrichtung einen veränderlichen Querschnitt auf. Die Verschlusswelle ist damit hergerichtet, den Oberkolben mittelbar oder unmittelbar von der Offenstellung in die Geschlossenstellung zu überführen.

Die Verschlusswelle ist weiter bevorzugt benachbart zum Oberkolben angeordnet derart, dass die Verschlusswelle bei der Überführung des Oberkolbens von der Offenstellung in die Geschlossenstellung unmittelbar auf den Oberkolben einwirkt und diesen derart bewegt, dass dieser die Zylinderöffnung verschließt. Beispielsweise ist die Verschlusswelle unmittelbar oberhalb des Oberkolbens angeordnet, wobei der Nocken oder das Exzenterbauteil auf dem Oberkolben anliegt. Bei Rotation der Verschlusswelle und damit Rotation des Nockens bzw. des Exzenterbauteils wird in diesem Beispiel eine absenkende Kraft auf den Oberkolben ausgeübt, wodurch der Oberkolben in den Einbettzylinder gefahren wird, wenn sich der Schiebeschlitten in der Einsatzposition befindet.

Der Schiebeverschluss umfasst ferner bevorzugt zumindest ein kompressibles Element, insbesondere ein Federelement, Zur Erbringung einer Haltekraft zum zumindest vorübergehenden Halten des Oberkolbens in entweder der Offenstellung oder der Geschlossenstellung. Mit anderen Worten wird der Oberkolben beispielsweise in der Offenstellung mittels des oder der Federelement(e) gehalten und gegen den Nocken bzw. gegen das Exzenterbauteil angedrückt. Übersteigt die absenkende Kraft von dem Exzenterbauteil bzw. dem Nocken auf den Oberkolben, beispielsweise durch Betätigung des Verschlusshebels, die Haltekraft des kompressiblen Elements wird der Oberkolben von dem Exzenterbauteil bzw. dem Nocken oder dem Verschlusshebel in die Geschlossenstellung überführt, das heißt in den Einbettzylinder gefahren.

Besonders bevorzugt kann der Oberkolben inzwischen der Offenstellung und der Geschlossenstellung eine Totpunktstellung einnehmen und der Oberkolben durch Überbringen der Position des Kolbens mittels des Verschlusshebels über die Totpunktstellung hinaus in der jeweiligen Stellung Offenstellung oder Geschlossenstellung sicher gehalten werden.

Der Schiebeschlitten weist ferner bevorzugt eine Serviceposition auf, in welcher die Zylinderöffnung vollständig freigegeben ist, wobei insbesondere der Schiebeschlitten in der Serviceposition um eine Serviceachse gekippt werden kann. Weiter bevorzugt ist der Schiebeschlitten in der gekippten Stellung arretierbar.

In einem weiteren Ausführungsbeispiel umfasst der Schiebeschlitten eine Sensoreinrichtung zum Erfassen der Position des Schiebeschlittens. Beispielsweise kann mittels der Sensoreinrichtung erfasst werden, ob die Einsatzposition oder die Serviceposition eingenommen wurde. Weiter beispielsweise kann die Positionsinformation des Schiebeschlittens an eine Steuerung der Einbettpresse ausgegeben werden und der Betrieb der Einbettpresse in Abhängigkeit von der Positionsinformation gesteuert werden, beispielsweise nur dann wenn der Schiebeschlitten und/oder der Verschlusshebel die geschlossene Position bzw. die Einsatzposition eingenommen haben.

Der Schiebeverschluss umfasst in einem weiteren Ausführungsbeispiel einen Schlittenträger, entlang welcher der Schiebeschlitten verschiebbar ist und welcher eine Schlittenaufnahme oder eine Schiebeführung aufweist zum Aufnehmen bzw. Führen des Schiebeschlittens. Der Schlittenträger ist in einem Beispiel eine plane oder ebene Fläche mit seitlich angeordneten Schlittenaufnahmen, z.B. eine Schiebeführung.

Der Schiebeverschluss kann ferner mit einem frontseitigen Granulatfach ausgerüstet sein, wobei insbesondere überschüssiges Granulat mittels Verschieben des Schiebeschlittens in Richtung der Einsatzposition in das Granulatfach befördert wird.

Das Granulatfach kann abnehmbar ausgestaltet sein, wobei das Granulatfach insbesondere eine magnetische Halterung aufweist zum Anbringen an den Schlittenträger zum einfachen Entleeren des in dem Granulatfach gesammelten überschüssigen Granulats.

Die Erfindung betrifft ferner eine Einbettpresse mit einem zuvor beschriebenen Schiebeverschluss.

In noch einem weiteren Aspekt der weiteren Ausgestaltung der Einbettpresse, der in der vorliegenden Anmeldung nicht unabhängig beansprucht wird, ist ein modulares Einbettpressensystem für die Einbettung von Proben beschrieben. In einer Einbettpresse für die Einbettung einer Probe in Einbettmaterial, typischerweise in Granulat kann dabei eine oder mehrere Proben gleichzeitig in der Einbettpresse verarbeitet werden. Die Einbettpresse umfasst einen Einbettzylinder zur Aufnahme der Probe. Der Einbettzylinder kann eine Hauptzylinderachse und eine Zylinderöffnung aufweisen, wobei die Hauptzylinderachse im Inneren des Einbettzylinders verläuft und durch die Zylinderöffnung hindurchtritt.

Das modulare Einbettpressensystem weist in diesem Aspekt der weiteren Ausgestaltung der Einbettpresse ein Grundmodul zur Steuerung von zumindest einer externen Einbettpresse auf und eine erste von dem Grundmodul separate und von diesem steuerbare externe Einbettpresse mit einem ersten Einbettzylinder zur Aufnahme von Proben.

Das Grundmodul umfasst hierbei eine zentrale Eingabeeinrichtung zur Eingabe von Steuerungsdaten der zumindest einen externen Einbettpresse, einen zentralen Stromversorgungsanschluss zum Anschluss des modularen Einbettpressensystems an eine äußere Stromversorgung, und einen Leistungsdistributor zur Bereitstellung der elektrischen Leistung an die zumindest eine externe Einbettpresse.

Das modulare Einbettpressensystem kann ferner einen Hydraulikverteiler zum Versorgen der zumindest einen externen Einbettpresse mit Kühlwasser umfassen

Das Grundmodul kann ferner zumindest einen Einbettpressenverbinder zum elektrischen Anschließen der zumindest einen externen Einbettpresse an das Grundmodul zum Übertragen sowohl der von der zumindest einen externen Einbettpresse benötigten elektrischen Leistung als auch von Steuerungsdaten zur Steuerung der zumindest einen externen Einbettpresse umfassen.

Das Grundmodul kann in einer weiteren Ausführungsform eine Grundmoduleinbettpresse aufweisen, welche in einem gemeinsamen Grundmodulgehäuse beherbergt ist. Mit anderen Worten handelt es sich um eine interne Einbettpresse in dem Grundmodulgehäuse, die mit der Steuereinrichtung des Grundmoduls integriert aufgebaut ist.

Der Leistungsdistributor kann dazu ausgelegt sein, die elektrische Leistung an die Grundmoduleinbettpresse und die zumindest eine externe Einbettpresse derart zu verteilen, dass eine von der zentralen Steuerung vorgebbare Priorisierungsreihenfolge berücksichtigt wird. Mit anderen Worten kann von der zentralen Steuerung beispielsweise durch Benutzereingabe oder durch programmatorische Festlegung eine Reihenfolge der Zuteilung der elektrischen Leistung an die jeweilige interne oder externe Einbettpresse erfolgen. Dies ermöglicht beispielsweise, das modulare Einbettpressensystem an einer geringer dimensionierten elektrischen Netzversorgung zu betreiben, dabei aber alle Einbettpressen so in Betrieb zu nehmen, dass Zeitverluste möglichst klein gehalten werden. Mit anderen Worten kann das komplette modulare Einbettpressensystem somit in vorteilhafter Weise an einer allgemein üblichen bzw. standardisierten elektrischen Netzversorgung betrieben werden. Beispielsweise benötigen die Einbettpressen typischerweise lediglich im Aufheizvorgang die volle elektrische Leistung, im Abkühlbetrieb hingegen nur eine wesentlich geringere elektrische Leistung.

Der Leistungsdistributor des modularen Einbettpressensystems kann ferner dazu ausgelegt sein, die elektrische Leistung an die Grundmoduleinbettpresse und die zumindest eine externe Einbettpresse bei Erreichen oder Überschreiten einer vorgebbaren elektrischen Leistungsmenge getaktet aufzuteilen. Mit anderen Worten kann der Leistungsdistributor hergerichtet sein, die elektrische Leistung so an die Einbettpressen aufzuteilen, dass ein Gesamtbetrag an elektrischer Leistung, die von dem äußeren Stromnetz benötigt wird, nicht überschritten wird. Erkennt der Leistungsdistributor anhand der von der zentralen Steuerung zur Verfügung gestellten Daten beispielsweise, dass ein Aufheizvorgang einer externen Einbettpresse noch anhält aber kurz vor Vollendung steht, kann dieser Aufheizvorgang Prozess A eine Priorität A zugewiesen bekommen. Der gewünschte Start eines Prozesses B, beispielsweise ein weiterer Aufheizvorgang, kann dann entweder von der zentralen Steuerung verzögert gestartet werden, d.h. ein gewünschter Aufheizvorgang des Prozesses B wird erst gestartet, wenn der Prozess A weniger elektrische Leistung benötigt und genügend Energie für den Start des Prozesses B zur Verfügung steht. Mit anderen Worten wird der priorisiert angesteuerte Prozess B erst gestartet, wenn der Prozess A zu takten beginnt und somit ein freier Takt für den Prozess B bereit steht. In einem anderen Fall kann Prozess B sofort gestartet werden und die elektrische Leistung mittels des Leistungsdistributors derart auf die Prozesse A und B aufgeteilt werden, dass beide Prozesse ggf. mit verminderter Leistung bzw. gemischt getaktet betrieben werden. Dies kann durch die getaktete Aufteilung der elektrischen Leistung erzielt werden.

Der zumindest eine Einbettpressenverbinder, der zentrale Stromversorgungsanschluss und der Hydraulikverteiler können beispielsweise gemeinsam an einer Rückseite des Grundmoduls angeordnet sein.

Weiter bevorzugt sind zwei oder drei externe Einbettpressen an das Grundmodul anschließbar. Alle externen Einbettpressen können von dem Grundmodul gesteuert und mit elektrischer Leistung versorgt werden. Besonders vorteilhaft benötigen die externen Einbettpressen hierbei keine vollständige Prozesssteuerungseinheit mehr, da alle Prozesssteuerungskomponenten in dem Grundmodul beherbergt sind. Hiermit kann eine deutliche Reduktion der Systemkosten erzielt werden. Zugleich kann die Ergonomie für den Anwender dadurch erhöht werden, dass alle Prozesse von einem zentralen System gestartet und verwaltet werden können. Beispielsweise kann dies zum Tragen kommen, wenn die mehreren Einbettpressen parallel denselben Prozess ausführen sollen und der Anwender die Prozessparameter nur einmal für den ersten Prozess manuell eingeben muss, für die Programmierung der weiteren identischen Prozesse dann auf die bereits in der zentralen Steuerung eingegebenen Parameter zurückgreifen kann. Auch kann der Anwender entlastet werden, indem lediglich eine Steuer- und Bedieneinheit berücksichtigt werden muss und hier an einer zusammengefassten Stelle die Betriebsparameter aller Einbettpressen des modularen Einbettpressensystems dargestellt werden.

Die zumindest eine externe Einbettpresse kann in einer weiter bevorzugten Ausführungsform eine Anzeigeeinrichtung aufweisen zum Darstellen des Betriebszustands, insbesondere eine farbändernde Anzeigeeinrichtung. Eine solche Anzeigeeinrichtung kann beispielsweise durch Bereitstellung einer Leuchtfarbe, beispielsweise realisiert durch eine Vierfarbleuchte bzw. vier LEDs unterschiedlichen Farbwertes, dargestellt werden. So wären beispielsweise darzustellende Betriebszustände einer externen Einbettpresse erstens Heizbetrieb, beispielsweise Farbe rot, zweitens Zustand aufnahmebereit oder fertig, beispielsweise Farbe grün, drittens Kühlbetrieb, beispielsweise Farbe blau, und viertens Zustand nicht bereit bzw. Deckel offen mit der Farbe weiß. Aber auch die Darstellung anderer und/oder weiterer Betriebszustände kann mit der Anzeigeeinrichtung realisiert werden. Die dezentrale an der jeweiligen Einbettpresse angeordnete Anzeigeeinrichtung kann dem Anwender somit einen schnellen ersten Überblick über den prinzipiellen Zustand einer der Einbettpressen des modularen Einbettpressensystems vermitteln, wobei die genauen Zustandsdaten und weiteren Informationen weiterhin an der zentralen Eingabeeinrichtung am Grundmodul angezeigt bzw. zur Verfügung gestellt werden.

Die zumindest eine externe Einbettpresse kann weiter bevorzugt einen dezentralen Bedienknopf umfassen. Ein solcher dezentraler Bedienknopf kann beispielsweise herangezogen werden, um für die zentrale Eingabeeinrichtung die anzuzeigende, einzustellende oder zu programmierende Einbettpresse auszuwählen. Dies stellt also eine besonders vorteilhafte und benutzerfreundliche Ausführungsform dar mit einer Mischung aus zentraler Steuerung der Prozessparameter und dezentraler Anwahl der an der zentralen Eingabeeinrichtung einzustellender Parameter.

Der dezentrale Bedienknopf kann weiter bevorzugt zugleich die Anzeigeeinrichtung aus dem vorstehenden Anspruch umfassen. Beispielsweise kann dies gelöst werden, indem ein beleuchtbarer Bedienknopf an der jeweiligen Einbettpresse angeordnet wird, und der Farbzustand des Bedienknopfes den Betriebszustand der jeweiligen Einbettpresse darstellt. Ferner kann dies gelöst werden, indem der Bedienknopf einen Leuchtring oder Farbring um den Bedienknopf herum aufweist, und der Farbring anhand der dargestellten Farbe den Betriebszustand der jeweiligen Einbettpresse darstellt. Somit kann auf einen Blick der prinzipielle Betriebszustand aller Einbettpressen des modularen Einbettpressensystems von dem Anwender erfasst werden. Sind Informationen zu einer Einbettpresse oder Änderungen am Betriebsablauf einer Einbettpresse seitens des Anwenders gewünscht, so kann die jeweilige Einbettpresse mittels des Bedienknopfes angewählt werden und in der zentralen Eingabeeinrichtung die jeweiligen Prozessparameter eingegeben werden.

Die Grundmoduleinbettpresse und/oder die zumindest eine externe Einbettpresse kann einen Schiebeverschluss umfassen.

Das modulare Einbettpressensystem kann ferner mit einer zentralen Absaugeinrichtung ausgerüstet sein mit einem Absaugverteiler zum Verbinden der Grundmoduleinbettpresse und der zumindest einen externen Einbettpresse mit der zentralen Absaugeinrichtung.

Es ist für den Fachmann ersichtlich, dass die Erfindung zwar besonders vorteilhaft für Einbettpressen verwendbar ist, jedoch prinzipiell auch für andere Maschinen einsetzbar ist. Diese sollen nicht ausgeschlossen sein.

Im Folgenden wird die Erfindung anhand von Ausführungsbeispielen und unter Bezugnahme auf die Figuren näher erläutert, wobei gleiche und ähnliche Elemente teilweise mit gleichen Bezugszeichen versehen sind und die Merkmale der verschiedenen Ausführungsbeispiele miteinander kombiniert werden können.

### Kurzbeschreibung der Figuren

Es zeigen:
- Fig. 1: eine schematische Seiten-Ansicht einer Einbettpresse mit geschlossenem Verschlusshebel,
- Fig. 2: eine schematisch Front-Ansicht auf eine Einbettpresse,
- Fig. 3: eine Seiten-Schnittansicht einer Einbettpresse mit geschlossenem Verschlusshebel,
- Fig. 4: eine perspektivische Draufsicht auf eine Einbettpresse mit geschlossenem Verschlusshebel,
- Fig. 5: eine weitere perspektivische Ansicht auf eine Einbettpresse mit geschlossenem Verschlusshebel,
- Fig. 6: eine weitere Schnittansicht einer Einbettpresse mit geschlossenem Verschlusshebel,
- Fig. 7: noch eine weitere Schnittansicht einer Einbettpresse mit geschlossenem Verschlusshebel,
- Fig. 8: eine Schnittansicht einer Einbettpresse mit Verschlusshebel in Scheitelpunktposition,
- Fig. 9: eine schematische Seiten-Aufsicht einer Einbettpresse mit Verschlusshebel in Scheitelpunktposition,
- Fig. 10: eine Seiten-Schnittansicht einer erfindungsgemäßen Einbettpresse,
- Fig. 11: eine Front-Schnittansicht einer erfindungsgemäßen Einbettpresse,
- Fig. 12: eine Ansicht einer Einbettpresse,
- Fig. 13: eine schematische Seiten-Ansicht einer Einbettpresse mit geöffnetem Verschlusshebel,
- Fig. 14: eine schematische Front-Ansicht auf eine Einbettpresse mit geöffnetem Verschlusshebel,
- Fig. 15: eine Seiten-Schnittansicht einer Einbettpresse mit geöffnetem Verschlusshebel,
- Fig. 16: eine perspektivische Ansicht auf eine Einbettpresse mit geöffnetem Verschlusshebel,
- Fig. 17: eine weitere perspektivische Ansicht auf eine Einbettpresse mit geöffnetem Verschlusshebel,
- Fig. 18: eine Seiten-Schnittansicht einer Einbettpresse mit geöffnetem Verschlusshebel,
- Fig. 19: eine schematische Seiten-Ansicht einer Einbettpresse mit Schiebeschlitten in Serviceposition,
- Fig. 20: eine Seiten-Schnittansicht einer Einbettpresse mit Schiebeschlitten in Serviceposition,
- Fig. 21: eine schematische Front-Ansicht auf eine Einbettpresse mit Schiebeschlitten in Serviceposition,
- Fig. 22: eine perspektivische Ansicht auf eine Einbettpresse mit Schiebeschlitten in Serviceposition,
- Fig. 23: eine weitere perspektivische Ansicht auf eine Einbettpresse mit Schiebeschlitten in Serviceposition,
- Fig. 24: eine Seiten-Schnittansicht einer Einbettpresse mit Absaugeinrichtung,
- Fig. 25: eine weitere Seiten-Schnittansicht einer Einbettpresse mit Absaugeinrichtung,
- Fig. 26: eine perspektivische Ansicht auf eine Einbettpresse mit Absaugeinrichtung,
- Fig. 27: eine perspektivische Ansicht auf eine Einbettpresse mit Absaugeinrichtung und Einfülltrichter,
- Fig. 28: eine Seiten-Schnittansicht einer weiteren Ausführungsform einer Einbettpresse mit Absaugeinrichtung und Einfülltrichter,
- Fig. 29: eine schematisch Rückansicht eines modularen Einbettpressensystems,
- Fig. 30: eine externe Einbettpresse eines modularen Einbettpressensystems,
- Fig. 31: ein Basismodul eines modularen Einbettpressensystems,
- Fig. 32: ein modulares Einbettpressensystem mit Basismodul und externer Einbettpresse,
- Fig. 33: eine weitere Anordnung eines modulares Einbettpressensystem mit Basismodul und externer Einbettpresse,
- Fig. 34: ein modulares Einbettpressensystem mit Basismodul und drei externen Einbettpressen,
- Fig. 35: ein schematischer Ablaufplan für die Leistungsansteuerung mehrerer Einbettpressen,
- Fig. 36: ein weiterer Ablaufplan eines Befüllungsassistenten.

### Detaillierte Beschreibung der Erfindung

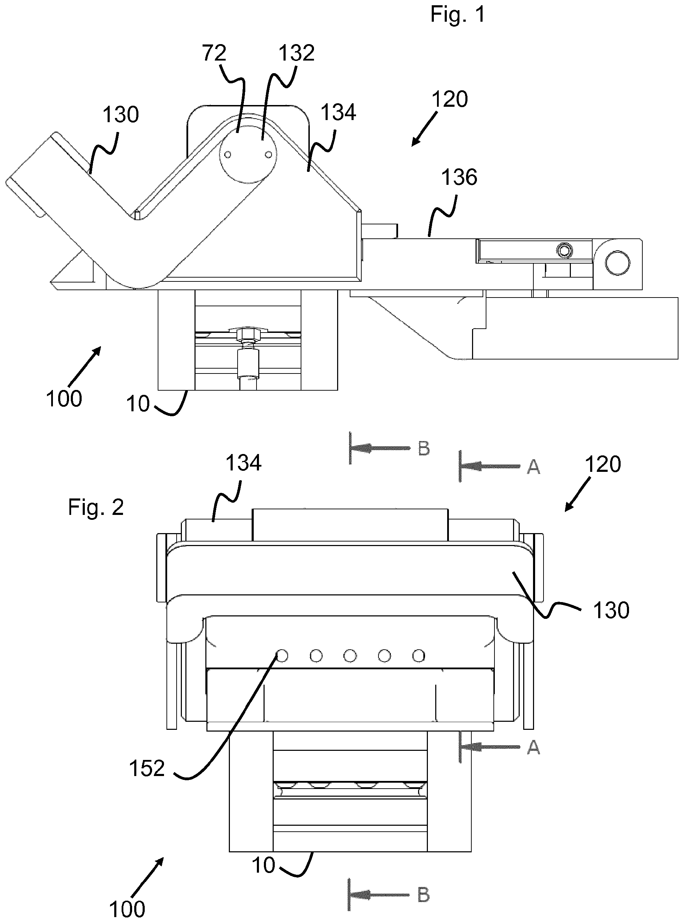

Bezug nehmend auf **Fig. 1** ist eine erste Seiten-Aufsicht einer erfindungsgemäßen Schiebeverschlusseinrichtung 120 einer Einbettpresse 100 mit geschlossenem Verschlusshebel 130 gezeigt. Der Verschlusshebel 130 ist in einer Verschlusswelle 132 gelagert, die oberseitig am Schiebeschlitten 134 angeordnet ist. Die Verschlusswelle 132 wird in diesem Beispiel nach außen von einem Drehteil 72 abgedeckt. Der Schiebeschlitten 134 kann entlang des Schlittenträgers 136 verschoben werden und befindet sich in der Einsatzposition, so dass der Einbettzylinder 10 von dem Schiebeverschluss 120 verschlossen ist.

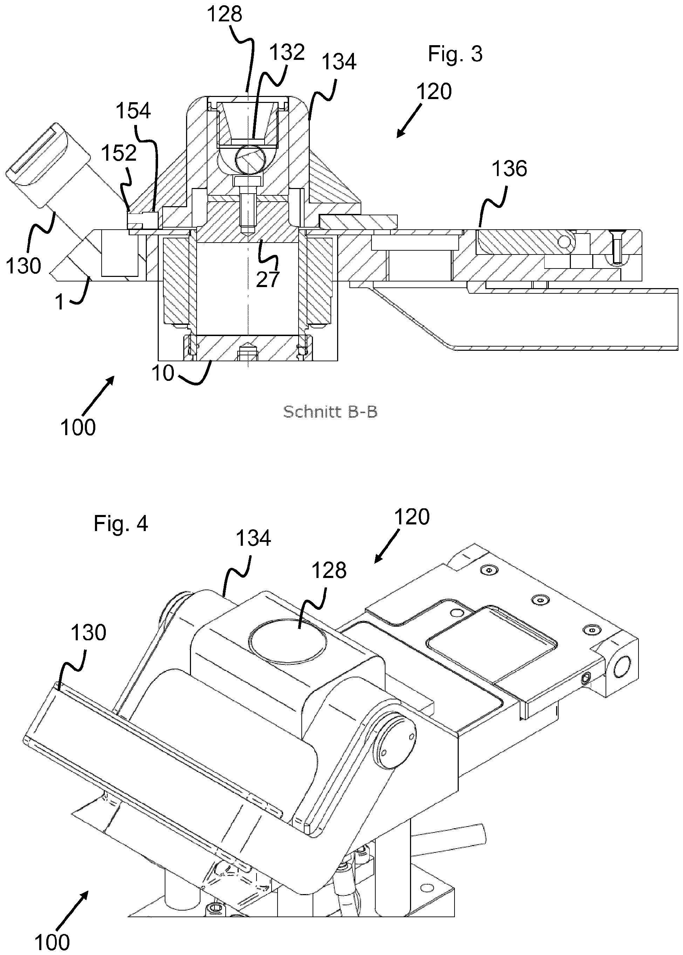

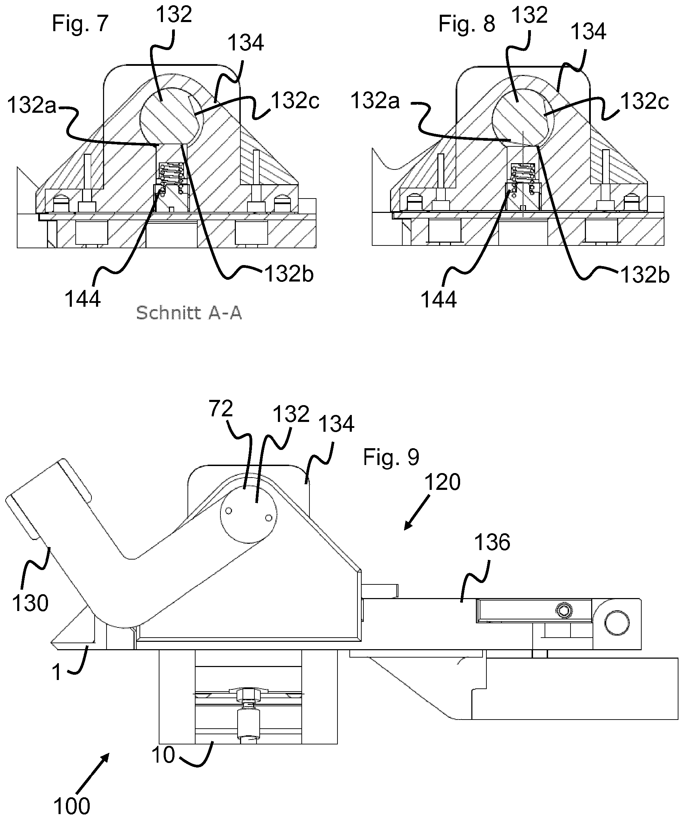

**Fig. 2** zeigt eine Front-Aufsicht der in Fig. 1 gezeigten Schiebeverschlusseinrichtung 120 mit geschlossenem Verschlusshebel 130. Die Schnittmarkierungen B-B und A-A zeigen die Schnittebenen der Fig. 3 bzw. 7. Frontseitig des Schiebeschlittens 134 sind Absaugöffnungen 152 der Absaugeinrichtung 150 angeordnet, in diesem Beispiel 5 nebeneinander angeordnete Absaugöffnungen.

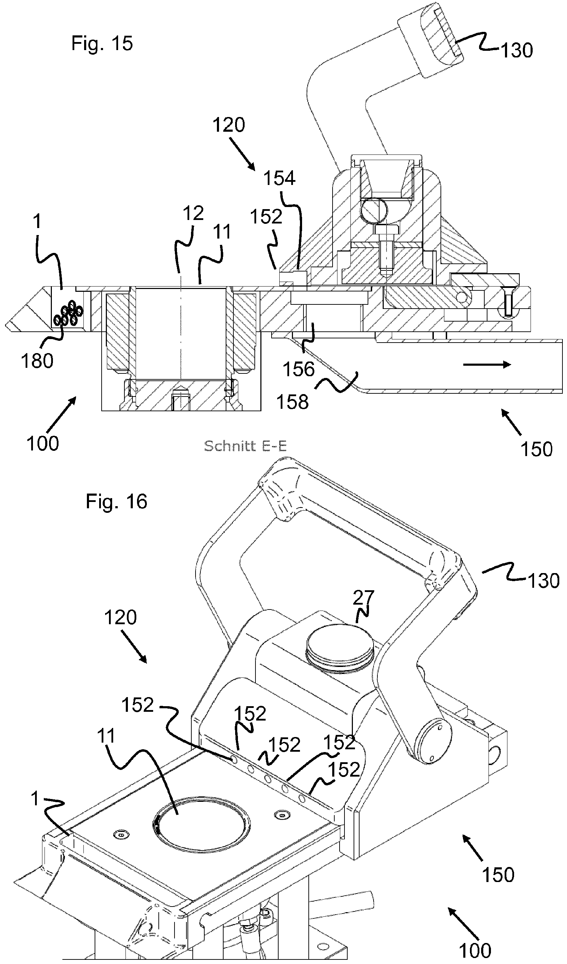

**Fig. 3** zeigt die Schnittebene B-B aus Fig. 2 mit Verschlusseinrichtung 120 in der Einsatzposition und dem Verschlusshebel 130 in geschlossener Position. Der Oberkolben 27 ist in den Zylinder 10 so eingerückt, dass die Zylinderöffnung 12 (siehe z.B. Fig. 15) verschlossen ist. Die Verschlusswelle 132 führt quer durch den Schiebeschlitten 134.

Vorderseitig des Schlittenträgers 136 ist ein Granulatfach 1 zum aufsammeln von überschüssigem Granulat angeordnet. Wenn der Schiebeschlitten 134 in die Einsatzposition bewegt wird, schiebt er automatisch überschüssiges Granulat dort hinein.

Vorderseitig des Schiebeschlittens 134 ist eine Absaugöffnung 152 dargestellt, die innerhalb des Schiebeschlittens 134 in einen Schiebeschlittenkanal 154 übergeht.

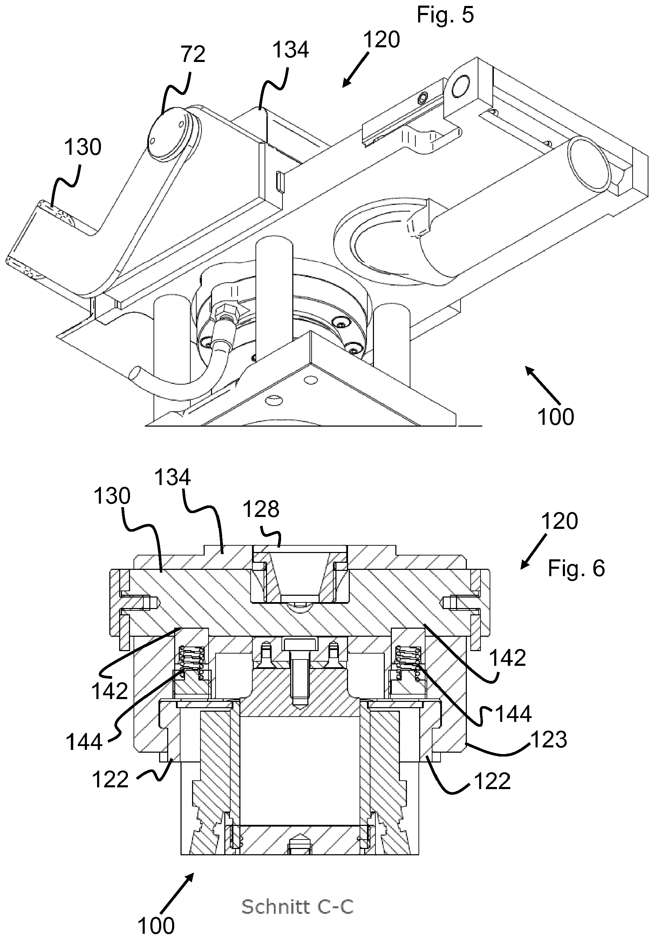

**Fig. 4** zeigt eine perspektivische schematische Ansicht der Verschlusseinrichtung 120 in geschlossener Position des Verschlusshebels 130 wie zuvor. Die Oberkolbenabdeckung 128 schließt in der geschlossenen Position bündig mit der Oberseite des Schiebeschlittens 134 ab. **Fig. 5** zeigt hierzu eine weitere perspektivische schematische Ansicht der Verschlusseinrichtung 120, die den Zylinder 10 verschlossen hält.

**Fig. 6** zeigt eine weitere Schnittansicht, wobei der Schnitt entlang einer Ebene geführt ist, die in Fig. 3 mittig durch Oberkolbenabdeckung 128, Verschlusswelle 132 und Zylinder 10 führt. Die Verschlusswelle 132 weist entlang ihrer Erstreckungsrichtung einen veränderlichen Querschnitt auf. Die Verschlusswelle 132 zeigt Einkerbungen 142, in die Federelemente 144 eingreifen. Die Federelemente 144 erzeugen eine Rückstellkraft, die einer Art "Verknieung" gleich den Oberkolben 27 und somit den Verschlusshebel 130 entweder in Geschlossenstellung oder in Offenstellung halten. Ferner ist in Fig. 6 eine Schlittenführung 122 dargestellt, die beidseits des Zylinders 10 den Schiebeschlitten 134 entlang seiner Verschieberichtung (aus der Blattebene heraus) führt.

**Fig. 7** zeigt schließlich eine Schnittansicht entlang der in Fig. 2 gezeigten Schnittlinie A-A. Die Verschlusswelle 132 weist in diesem Bereich seiner Erstreckung zwei abgeflachte Bereiche 132a und 132b auf. Dazwischen weist die Verschlusswelle 132 eine Ausstülpung auf, also einen Nocken 132c. Das flexible Element 144 drückt gegen den abgeflachten Bereich 132a und erzeugt so eine Verhaltekraft, so dass die Verschlusswelle 132 in der Geschlossenstellung verhält. Mittels Einstellung der Federkraft bzw. der Andrückkraft des flexiblen Elements 144 an die Verschlusswelle 132 kann die Ausrückkraft, die aufgebracht werden muss, um den Verschlusshebel 130 aus der Geschlossenstellung auszurücken, beeinflusst bzw. eingestellt werden.

Bezug nehmend auf **Fig. 8** verharrt die Verschlusseinrichtung 120 in der Scheitelpunktposition, in welcher die Ausrückkraft zum Ausrücken des Verschlusshebels 130 aus der Geschlossenstellung just aufgebracht wurde oder der Verschlusshebel 130 beim Führen in die Geschlossenstellung mittels der nun ansteigenden Verhaltekraft des flexiblen Elements 144 in die Geschlossenstellung gezogen wird. Die Bewegung des Verschlusshebels in die beiden Endstellungen "Offenstellung" und "Geschlossenstellung" ist somit "ziehend und rastend". Durch das Drehen der Verschlusswelle 132 über den Totpunkt hinaus ergibt sich somit eine Verkeilung der Verschlusseinrichtung 120 und somit auch des mit der Verschlusseinrichtung in direktem Wirkzusammenhang stehenden Oberkolbens 27. Wird der Einbettzylinder 10 in Geschlossenstellung des Schiebeverschlusses 120 mit Zylinderdruck beaufschlagt, erzeugt dieser Zylinderdruck eine zusätzliche Verhaltekraft auf die Verkeilung des flexiblen Elements 144 mit dem abgeflachten Bereich 132a, so dass schließlich der Schiebeverschluss 120 im Betrieb der Einbettpresse 100 nicht mehr von Hand geöffnet werden kann. Mit **Fig. 9** ist ferner eine Seitenansicht auf die Verschlusseinrichtung 120 in Scheitelpunktposition gegeben.

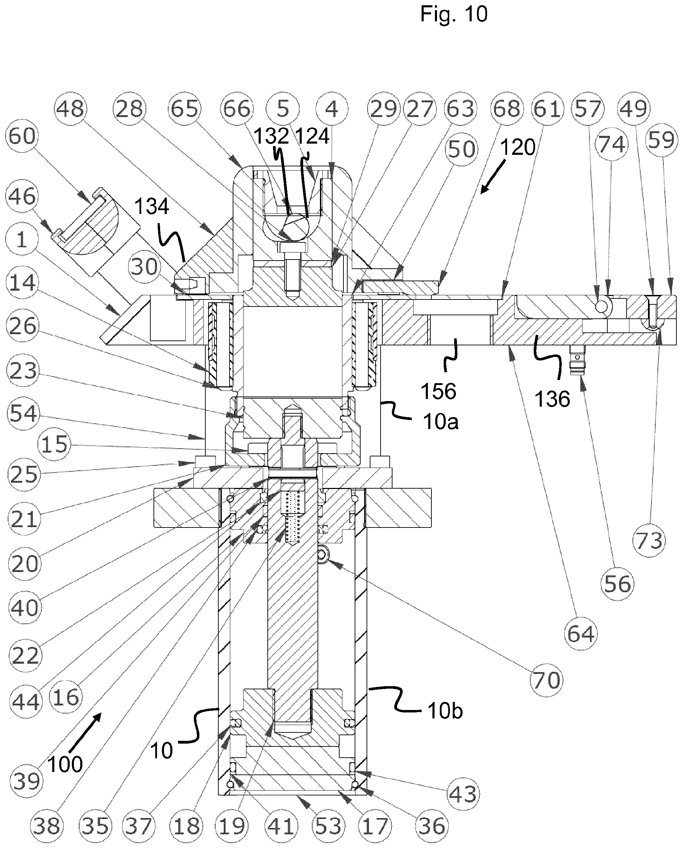

Bezug nehmend auf **Fig. 10** ist eine Seiten-Schnittansicht einer Einbettpresse 100 mit Schiebeverschlusseinrichtung 120 in der Einsatzposition des Schiebeschlittens 134 und der Geschlossenstellung des Verschlusshebels 130, in diesem Beispiel Hebel 60, dargestellt. Der Zylinder 10 unterteilt sich in einen Probenzylinder 10a und einen Druckzylinder 10b und weist ein Zylinderrohr 53 auf. Frontseitig ist das Granulatfach 1 angeordnet zur Aufnahme von überschüssigem Granulat. Die Exzenterführung 4 definiert zusammen mit dem Exzenterverschluss 5 einen Bewegungsraum 124 für die Verschlusswelle 132, in diesem Beispiel realisiert durch den Exzenterbolzen 66.

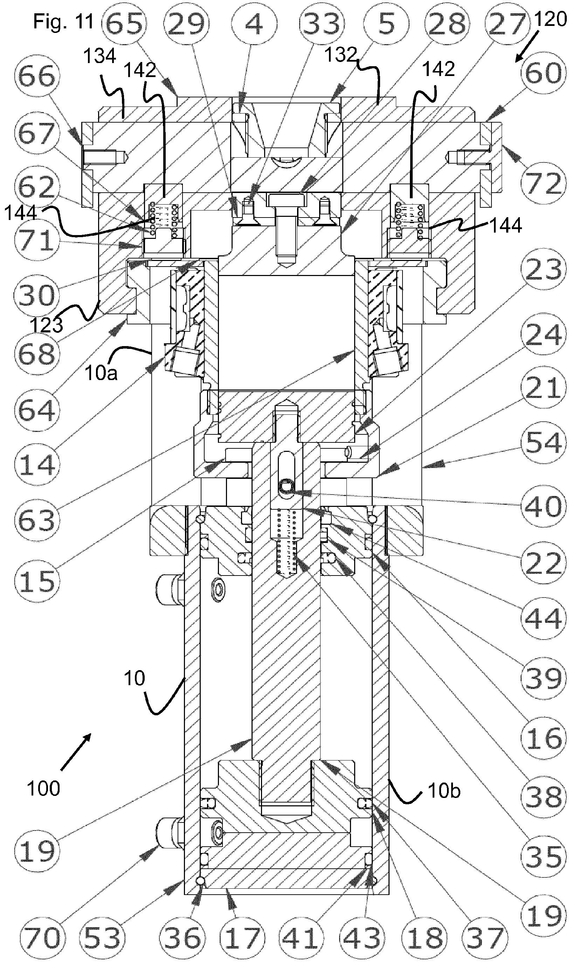

Zum Heizen und Kühlen einer in den Zylinder 10 eingesetzten Probe (nicht dargestellt) ist seitlich des Pressbereiches ein Heizkühlteil 14 angeordnet. Das Heizkühlteil 14 umschließt den Zylinder 10 ringförmig. Das Heizkühlteil 14 wird mittels Schlauchleitungen 34 (vgl. z.B. Fig. 11) mit Wasser versorgt. Eine Pressform 63 ist in den Probenzylinder eingesetzt, die einen bestimmten Durchmesser aufweist. Die Pressform 63 ist auswechselbar, um verschiedene Probendurchmesser zu realisieren. In diesem Beispiel ist eine 50mm-Pressform 63 eingesetzt.

Der untere Druckzylinder 10b weist einen Zylinderkopf 16 und eine Zylinderboden 17 auf. Ein Kolben 18 ist in dem Druckzylinder 10b beweglich angeordnet. Der Kolben 18 ist mit dem Ober-Unterkolben 23 mittels einer Kolbenstange 19 verbunden, so dass eine Lageänderung des Kolbens 18 eine Lageänderung des Ober-Unterkolbens 23 induziert. Der Oberkolben 27, in diesem Fall ein Presskolben 27, wird von dem Schiebeverschluss 120 positioniert und durch den im Probenzylinder 10a aufgebauten Druck blockiert. Hydraulikflüssigkeit wird mittels des Hochdruckschlauchs 55 zu dem Druckzylinder 10b beispielsweise über die Hydrauliköffnung 70 zu- bzw. abgeführt.

Der Verschlusshebel 130, in diesem Fall ein Hebel 60, kann eine Griffoberfläche 46 aufweisen zur Verbesserung der Haptik.

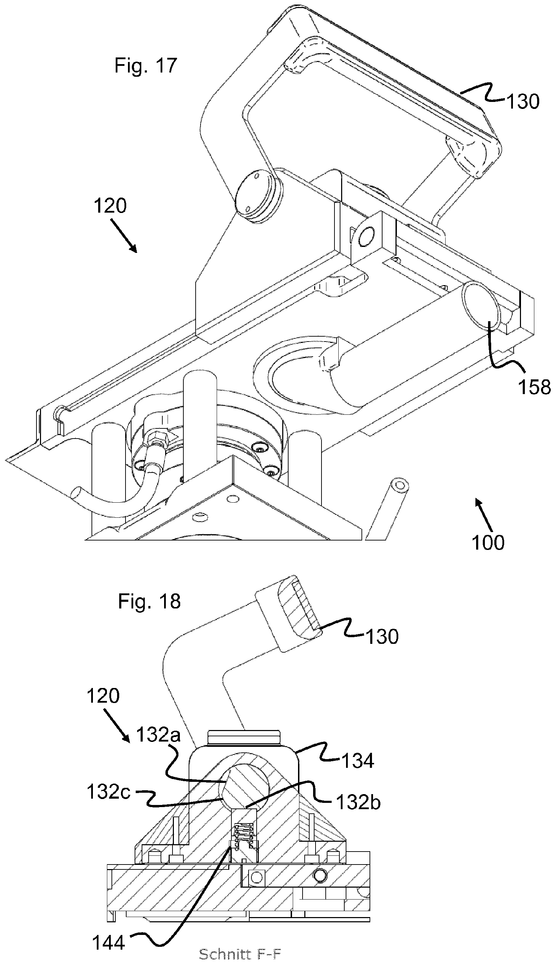

In dem Schlittenträger 136 kann ein erster Positionssensor 56 eingesetzt sein, beispielsweise ein Näherungsschalter 56. Der Näherungsschalter 56 ist in diesem Beispiel dazu ausgelegt, zu erkennen, ob die Stützplatte 74 eingefahren ist oder ausgefahren ist, was bedeutet, dass der Schiebeschlitten 134 eine Serviceposition eingenommen haben kann (vgl. z.B. Figs. 18 bis 23). Zum Einnehmen der Serviceposition wird der Schiebeschlitten 134 auf dem Schlittenträger 136 vollständig in Richtung der Schwenkplatte 59 verschoben und um die Achse 73 an der Schwenkplatte 59 gedreht. Hier ist der Positionssensor 56 realisiert als ein induktiver Näherungsschalter 56, z.B. in einer Bauform als Schließer.

In diesem Beispiel ist in den Schlittenträger 136 eine Abdeckplatte 61 eingesetzt, die den in dem Schlittenträger eingelassen Absauganschlusskanal 156 abdeckt. Eine Absaugabdeckung 68 ist in diesem Beispiel an dem Schiebeschlitten 134 angebracht.

Die Einsatzposition des Schiebeschlittens 134 wird von einem vorderen Positionssensor 30 erfasst, insbesondere handelt es sich um einen induktiven Positionssensor 30.

Bezug nehmend auf **Fig. 11** ist die Ausführungsform der Fig. 10 in einer Front-Schnittansicht dargestellt, gleiche Bezugszeichen stellen gleiche Gegenstände dar. Der Schiebeschlitten 134 hat die Einsatzposition und der Hebel 60 die Geschlossenstellung eingenommen. Die Schlittenführung 122 ist in dieser Ausführungsform durch eine Schiebeführung 64 realisiert, um die Führungszapfen 123 des Schiebeschlittens 134 herumgreifen und so eine sichere Führung des Schiebeschlittens 134 an dem Schlittenträger 136 realisieren.

Die Verschlusswelle 132 weist in der Geschlossenstellung unterseitig beidseits des Probenzylinders 10a je eine Einkerbung 142 auf, in die je ein Federelement 144, hier ein Federspanner 71, eingreift.

Das Heizkühlteil 14 wird mit den Schlauchleitungen 34 mit Kühlwasser gespeist.

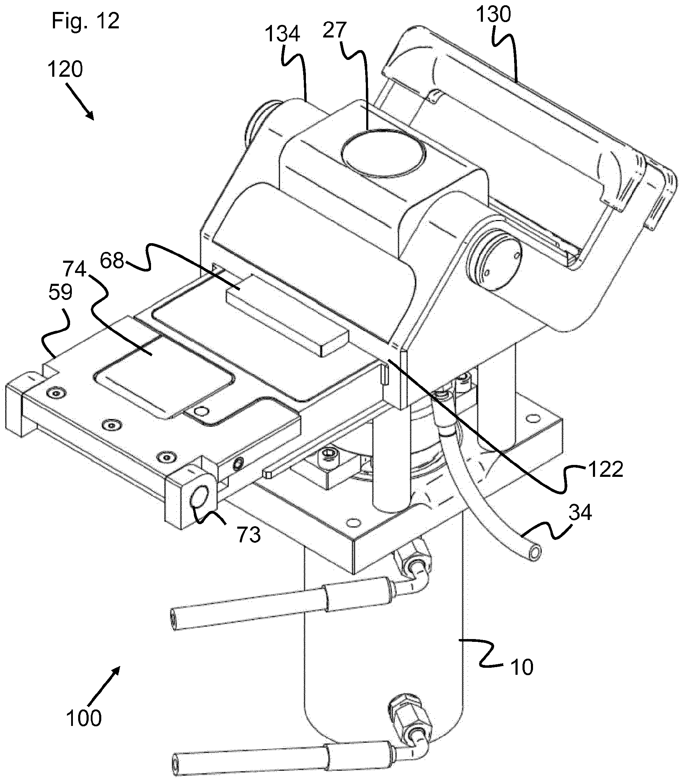

**Fig. 12** zeigt eine schematische Ansicht einer Einbettpresse 100 mit Schiebeverschluss 120 in Einsatzposition, in welcher die Zylinderöffnung 11 (vgl. z.B. Fig. 15) vollständig verschlossen ist. Durch die Verkeilung des Oberkolbens 27 in dem Probenzylinder 10a sowie des aufgebauten Druckes in dem Probenzylinder 10a ist der Schiebeverschluss 120 in der Geschlossenstellung gehalten. Der Schiebeschlitten 134 baut hierbei ggf. über die Führungszapfen 123 auf die Schlittenführung 122 Druck auf und wird damit von dem Schlittenträger 136 gehalten.

In der Offenstellung des Schiebeverschlusses 120 kann der Schiebeschlitten 134 entlang des Schlittenträgers 136 verschoben werden bis zu einer hinteren Endlage, bei welcher die Führungszapfen 123 nicht mehr in die Schlittenführung 122 eingreifen, da die Schlittenführung 122 sich nur über einen Teil des Schlittenträgers 136 erstrecken.

In der hinteren Endlage kann der Schiebeschlitten 134 sodann um die Schwenkachse geschwenkt werden, wobei er sich auf die Schwenkplatte 59 abstützt. Mittels der Stützplatte 74 kann eine Verrastung in der Serviceposition erzielt werden.

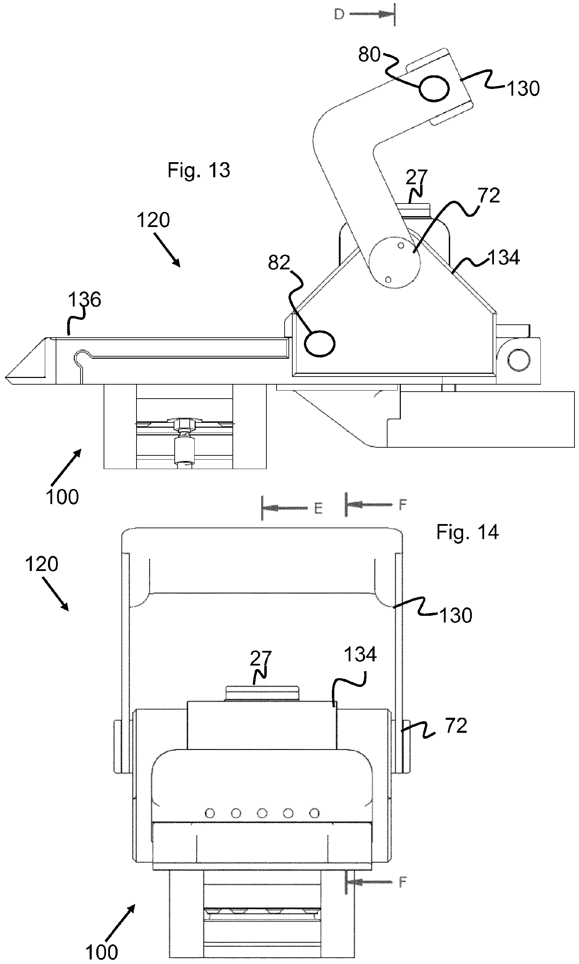

**Fig. 13** zeigt eine Seitenansicht der Einbettpresse 100, wobei der Schiebeverschluss in Richtung der hinteren Endlage verschoben ist, so dass die Zylinderöffnung (vgl. z.B. Fig. 15) freigegeben ist. In Fig. 13 ist in dem Verschlusshebel 130 ein Verschlusshebelsensor 80 integriert, der mit dem zweiten Verschlusshebelsensor 82 gemeinsam eine Positionserkennung des Verschlusshebels 130 ermöglicht. Insbesondere kann mit dem Verschlusshebelsensor 80 die Geschlossenstellung des Verschlusshebels abgefragt werden. **Fig. 14** zeigt zu derselben Position des Schiebeschlittens 134 eine Vorderansicht.

Bezug nehmend auf **Fig. 15** ist eine seitliche Schnittansicht eines Ausschnitts der Einbettpresse 100 gezeigt mit dem Schiebeschlitten in der zu Fig. 13 erläuterten Position. Die Einbettpresse 100 der in Fig. 15 gezeigten Form weist eine Absaugeinrichtung 150 auf, die in der in der Figur gezeigten Absaugposition des Schiebeschlittens 134 funktionsbereit ist. Die Absaugöffnung 152 ist kommunizierend über den Schiebeschlittenkanal mit dem in die Abdeckung 136 bzw. Schlittenträger 136 eingelassenen Absauganschlusskanal 156 verbunden. An den Absauganschlusskanal 156 schließt sich unmittelbar der Absaugluftkanal 158 an.

Ferner ist in Fig. 15 die Zylinderachse 12 dargestellt. Darüber hinaus weist das in Fig. 15 dargestellte Granulatfach 1 darin mit dem Schiebeschlitten 134 eingefüllte Granulatreste 180 auf.

Bezug nehmend auf **Fig. 16** wird die Absaugposition des Schiebeschlittens 134 mit einer weiteren perspektivischen Darstellung verdeutlicht. In den Schiebeschlitten 134 sind in diesem Beispiel 5 Absaugöffnungen 152 vorderseitig eingearbeitet. Auch die **Fig. 17** verdeutlicht die Absaugposition des Schiebeschlittens 134 mit noch einer weiteren perspektivischen Darstellung.

Bezug nehmend auf **Fig. 18** wird der Verschlusshebel 130 mit Verschlusswelle 132 in der Offenstellung verdeutlicht. Das flexible Element 144 greift in den abgeflachten Bereich 132b der Verschlusswelle ein und übt somit eine Haltekraft auf den Verschlusshebel 130 aus. Um den Verschlusshebel 130 aus der Offenstellung in die Geschlossenstellung zu überführen muss das flexible Element 144 in der Zeichenebene der Fig. 18 durch Kraftaufbringung nach unten ausgelenkt werden, wobei die auf den Verschlusshebel 130 aufgebrachte Kraft über den Nock 132c der Verschlusswelle 132 ggf. verstärkt und auf das flexible Element 144 übertragen wird.

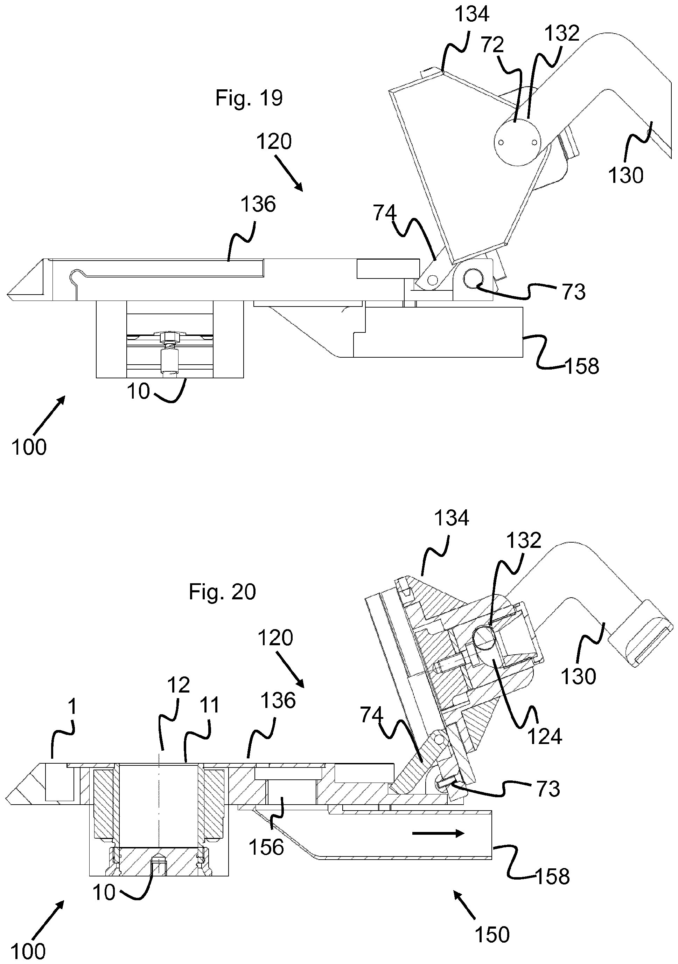

Mit **Fig. 19** wird die Serviceposition des Schiebeschlittens 134 verdeutlicht, wobei der Schiebeschlitten 134 mittels der in dem Schlittenträger 136 angelenkten Stützplatte 74 in der Serviceposition gestützt wird.

**Fig. 20** zeigt eine weitere Ausführungsform der Einbettpresse 100 mit einem Schiebeschlitten 134 in Serviceposition, wobei in dieser Ausführungsform die Stützplatte 74 an dem Schiebeschlitten 134 angelenkt ist und sich in der Aussparung in dem Schlittenträger 136 abstützt. Die Verschlusswelle 132 ist in dieser Position im Bewegungsraum 124 vollständig an eine Seite eingerückt.

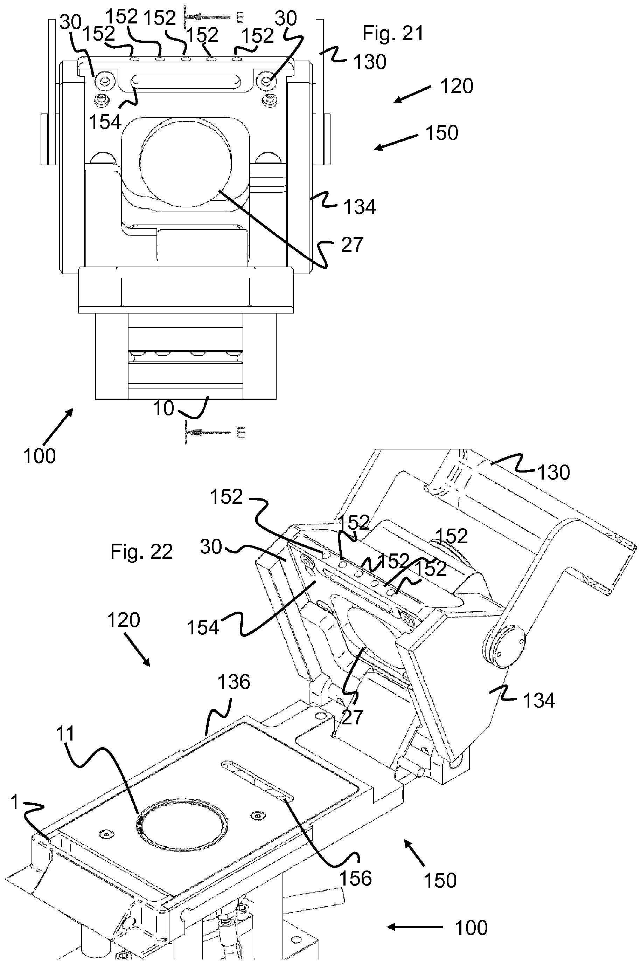

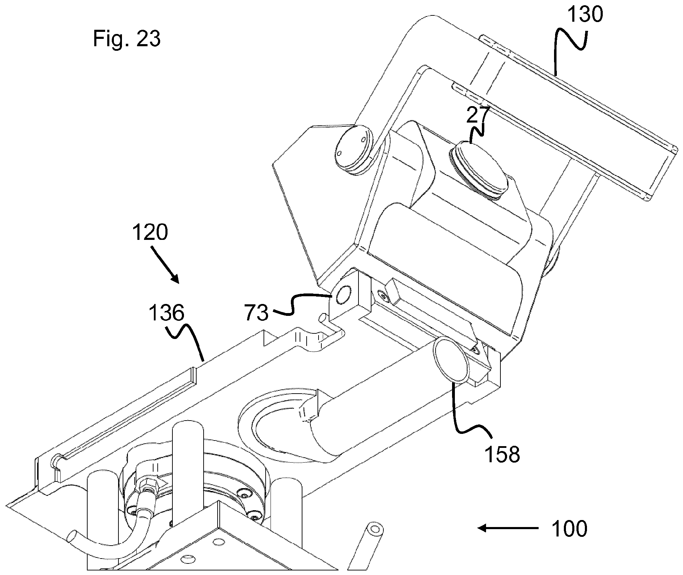

Bezug nehmend auf die **Figs. 21 bis 23** wird die Einbettpresse 100 mit in Serviceposition befindlicher Verschlusseinrichtung 120 von vorderseits dargestellt, wobei die leichte Zugänglichkeit des Oberkolbens 27 von der Unterseite her verdeutlicht ist. Hierbei ist auch eine Ausführungsform der Absaugeinrichtung 150 verdeutlicht. Die Absaugöffnungen 152 münden in den Schiebeschlittenkanal 154. Befindet sich der Schiebeschlitten 134 in der Absaugposition, liegt die unterseitige Öffnung des Schiebeschlittenkanals 154 bündig auf der Ausnehmung des Absauganschlusskanals 156 auf, so dass ein unterseits erzeugter Unterdruck durch den Absauganschlusskanal 156 und den Schiebeschlittenkanal 154 hindurch einen Sog an den Absaugöffnungen 152 erwirken kann. **Fig. 22** zeigt eine perspektivische Ansicht der Ausführungsform. **Fig. 23** zeigt ebenfalls die Einbettpresse 100 mit in Serviceposition befindlicher Verschlusseinrichtung 120 in einer weiteren perspektivischen Ansicht. In den Figuren 22 und 23 ist deutlich der vordere Positionssensor 30 dargestellt, der die Lage des Schiebeschlittens 134 in der Einsatzposition erfasst.

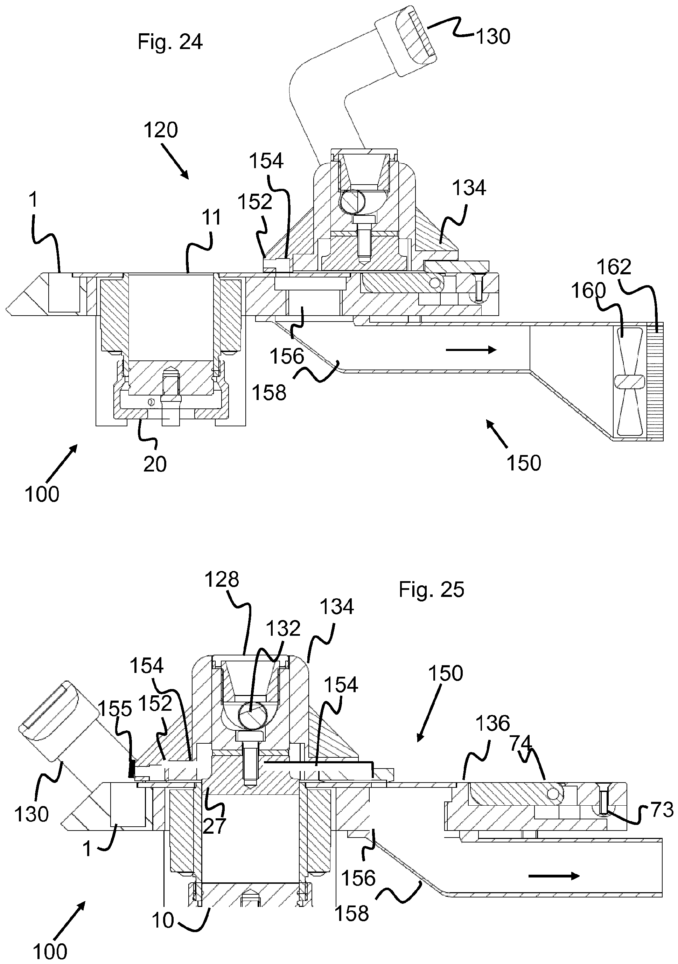

Bezug nehmend auf die **Fig. 24** ist die Einbettpresse 100 mit in Absaugposition gestelltem Schiebeschlitten 134 in Seiten-Schnittansicht dargestellt. Die Absaugöffnung 152 mündet in den Schiebeschlittenkanal 154, der wiederum in der Absaugposition in den in dem Schlittenträger 136 eingelassenen Absauganschlusskanal 156 mündet. Unterseits des Absauganschlusskanals 156 ist ein Absaugluftkanal 158 angeordnet, der die Abluft ggf. mit Dämpfen und/oder Stäuben zu einem Unterdruckerzeuger 160 abführt. In Abluftrichtung stromabwärts hinter dem Unterdruckerzeuger 160 ist ein Absaugfilter 162 angeordnet. Diese Anordnung ist beispielsweise vorteilhaft, wenn mit der Absaugeinrichtung 150 Dämpfe abgesaugt werden sollen. Der Absaugfilter 162 kann auch an geeigneter Stelle beispielsweise in dem Absaugluftkanal 158 und vor dem Unterdruckerzeuger 160 angeordnet sein, beispielsweise wenn neben Staub auch größere Teilchen in der Absaugluft zu erwarten sind und Schäden an dem Unterdruckerzeuger somit vermieden werden.

Bezug nehmend auf die **Fig. 25** ist eine weitere Ausführungsform der Einbettpresse 100 mit in Schiebeverschluss 120 in Geschlossenstellung dargestellt, wobei eine Absaugeinrichtung 150 realisiert ist, die auch in der Geschlossenstellung und insbesondere im Betrieb und Heizbetrieb der Einbettpresse eine Absaugung gewährleistet. Die Ansaugöffnung 152 ist um den Oberkolben 27 herum angeordnet. Gegebenenfalls wird die vorderseitige Ansaugöffnung, die in der Absaugstellung des Schiebeschlittens 134 in Benutzung war, von einem Ansaugdeckel 155 verschlossen, der in vorteilhafter Weise an dem Verschlusshebel 130 angeordnet bzw. angebracht ist. Somit verschließt der Verschlusshebel 130 nicht nur die Einbettpresse 100 zur Aufnahme des Betriebs, sondern auch die vorderseitigen Ansaugöffnungen 152, so dass die Sogwirkung für den Betrieb der Einbettpresse 100 durch den Unterdruckerzeuger 160 auf den Bereich der Zylinderöffnung 11 konzentriert werden kann.

Treten somit beispielsweise während des Heizbetriebs und damit während des Schmelzvorgangs des Granulats Dämpfe aus dem Probenzylinder 10a aus, die ggf. umweltschädlich oder gesundheitsschädlich sein können, vermag die Absaugeinrichtung 150 in der vorliegenden Ausführung auch diese Einflüsse aufzunehmen und somit die Anwendung der Einbettpresse zu verbessern.

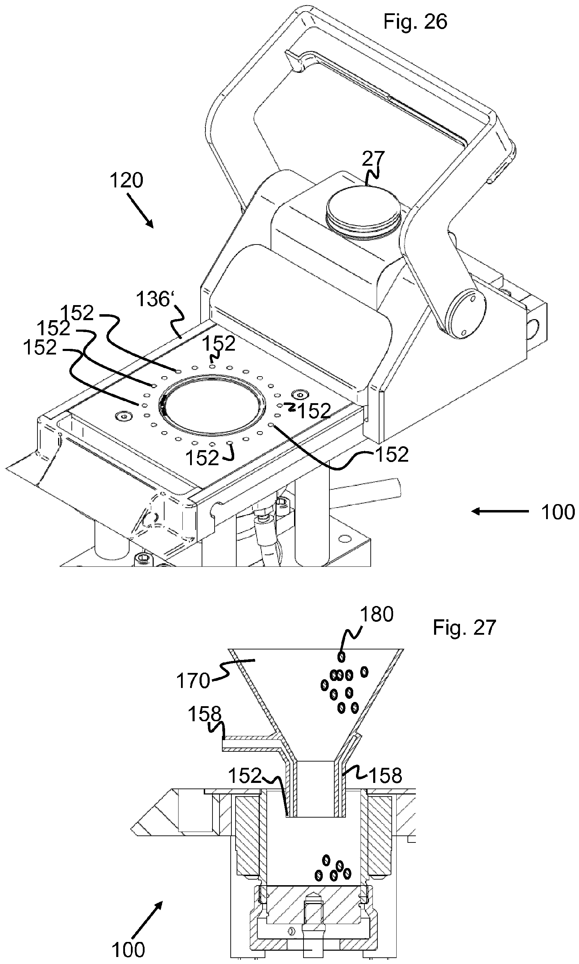

Bezug nehmend auf **Fig. 26** ist eine weitere Ausführungsform der Einbettpresse 100 mit Schiebeverschluss 120 gezeigt, wobei in die Abdeckung 136' bzw. in den Schlittenträger 136 Absaugöffnungen 152 eingebracht sind. Die Absaugöffnungen sind in diesem Beispiel konzentrisch um die Zylinderöffnung 11 herum angeordnet. Von unterhalb der Abdeckung 136' kann mittels eines dort angebrachten Absaugluftkanals 158 die Saugwirkung an den Absaugöffnungen 152 erzeugt werden.

**Fig. 27** zeigt noch eine Ausführungsform der Einbettpresse 100, wobei ein Einfülltrichter 170 zum Einfüllen von Granulat 180 in die Zylinderöffnung 11 eingesetzt ist. Der Einfülltrichter kann mittels des Absaugluftkanals 158 an die Unterdruckeinrichtung 160 angeschlossen werden, um direkt beim Einfüllen mittels eines Trichters Stäube zu entfernen.

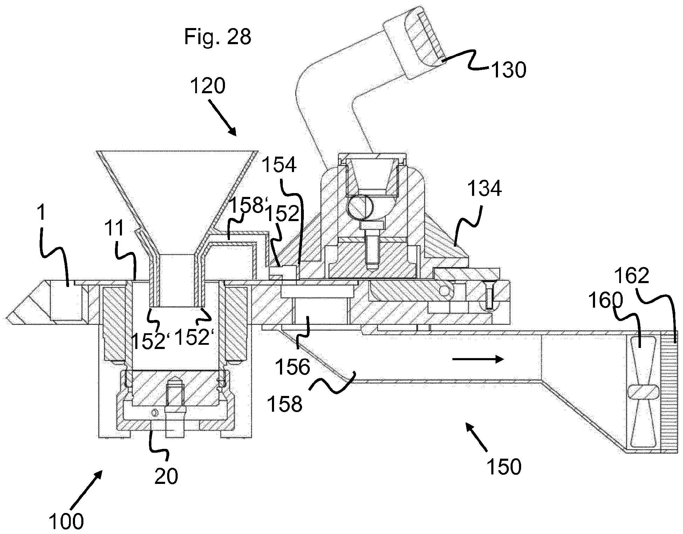

Bezug nehmend auf **Fig. 28** ist eine weitere Ausführungsform der Einbettpresse 100 mit eingesetztem Einfülltrichter 170 zum Einfüllen von Granulat 180 in die Zylinderöffnung 11 gezeigt, wobei der Einfülltrichter an die Absaugeinrichtung 150 angeschlossen ist. Die am Einfülltrichter angebrachte Absaugöffnung 152', die sich ringförmig um die untere Trichteröffnung des Einfülltrichters 170 erstreckt, ist kommunizierend mit einem Trichterabsaugluftkanal 158' verbunden. Der Einfülltrichter 170 kann nun bevorzugt so positioniert werden, dass der Trichterabsaugluftkanal 158' an die im Schiebeschlitten 134 vorhandene Absaugöffnung 152 anstellbar ist. Die Unterdruckerzeugungseinrichtung 160 kann somit in vorteilhafter Weise auch den Einfülltrichter 170 mit absaugendem Unterdruck versorgen.

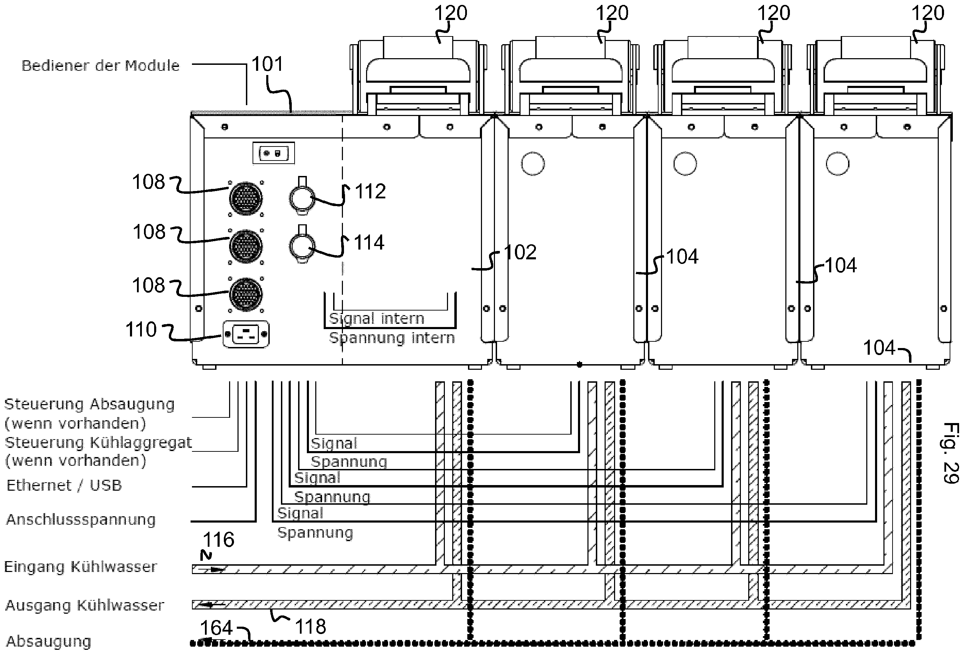

Bezug nehmend auf **Fig. 29** ist eine Ausführungsform des modularen Einbettpressensystems 106 mit einer in dem Grundmodul 101 angeordneten internen Einbettpresse 102 und drei externen Einbettpressen 104 in einer Rückansicht dargestellt. Alle Einbettpressen 102, 104 weisen einen Schiebeverschluss 120 auf und sind direkt benachbart nebeneinander angeordnet.

Das Grundmodul 101 weist rückseitig drei Einbettpressenverbinder 108 zum Übertragen sowohl der von den externen Einbettpressen 104 benötigten elektrischen Leistung als auch von Steuerungsdaten zur Steuerung der externen Einbettpressen 104. Ferner weist das Grundmodul 101 einen zentralen Stromversorgungsanschluss 110 auf zur Versorgung aller Einbettpressen 100, 102, 104 mit elektrischer Leistung aus der äußeren Stromversorgung, beispielsweise dem öffentlichen Stromversorgungsnetz. Ferner umfasst das Grundmodul 101 einen Kühlwasserzulauf 112 und einen Kühlwasserrücklauf 114, die beispielsweise entweder von einer externen Wasserversorgung oder einem Umwälzkreislauf mit Wärmetauscher versorgt wird. Das modulare Einbettpressensystem 106 weist eine Wassersammelschiene 116, 118 auf zum Anschluß der Einbettpressen 102, 104. Ferner ist eine Zentralabsaugung 164 vorgesehen, welche von dem Grundmodul 101 aus steuer- und regelbar ist.

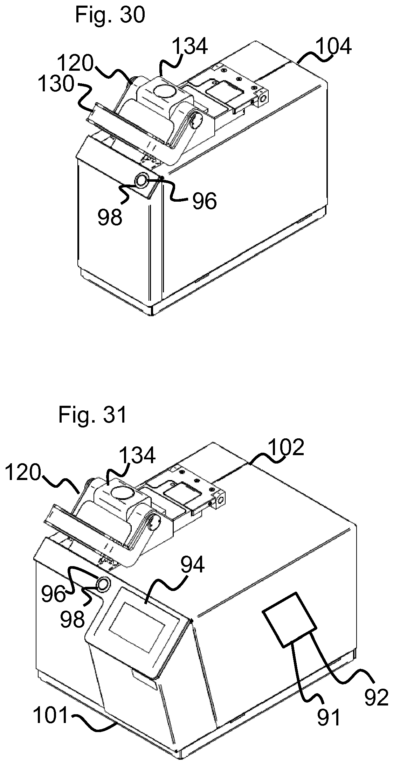

Die **Figs. 30 bis 34** zeigen verschiedene Varianten des Betriebs des modularen Einbettpressensystems. **Fig. 30** zeigt eine einzelne externe Einbettpresse 104 zum Anschluss an ein erfindungsgemäßes Grundmodul 101. Die externe Einbettpresse 104 weist den Schiebeverschluss 120 auf. Ferner ist die externe Einbettpresse 104 mit einem Bedienknopf 96 sowie einer Anzeigeeinrichtung 98 ausgerüstet.

**Fig. 31** zeigt ein Grundmodul 101 mit einer internen Einbettpresse 102. Das Grundmodul 101 weist eine zentrale Eingabeeinrichtung 94 auf, womit die interne und die externen Einbettpressen 102, 104 programmiert und gesteuert werden können. Ferner weist das Grundmodul einen Bedienknopf 96 und eine Anzeigeeinrichtung 98 auf. Die Anzeigeeinrichtung ist als Leuchtring 98 realisiert, der um den Bedienknopf 96 herum angeordnet ist. In dem Grundmodul 101 ist ferner die zentrale Steuerungseinrichtung 92 angeordnet, die Steuerungsparameter für die interne und die externen Einbettpressen 102, 104 erzeugt und ausgibt. Ferner ist in dem Grundmodul 101 ein Leistungsdistributor 91 angeordnet, mittels welchem die an dem Grundmodul 101 zur Verfügung gestellte elektrische Leistung an die interne und externen Einbettpressen 102, 104 verteilt wird.

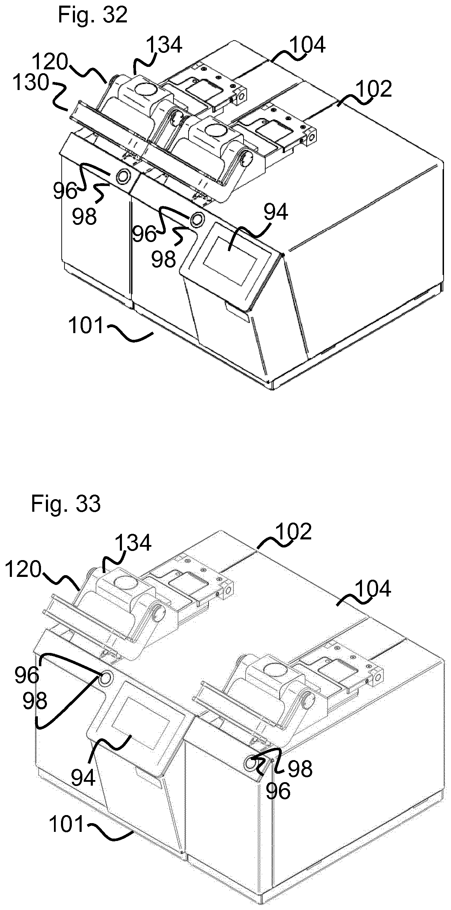

**Fig. 32** zeigt ein modulares Einbettpressensystem 106 mit einer internen Einbettpresse 102 sowie einer externen Einbettpresse 104. Beide Einbettpressen 102, 104 sind mit dem Schiebeverschluss 120 sowie einem Bedienknopf 96 und einer Anzeigeeinrichtung 98 ausgerüstet. Das Basismodul 101 verfügt ferner über eine zentrale Eingabeeinrichtung 94 zum Programmieren und Steuern aller mit dem Basismodul verbundenen Einbettpressen 102, 104. **Fig. 33** zeigt eine weitere alternative Anordnung des modularen Einbettpressensystems 106 mit einer internen Einbettpresse 102 sowie einer externen Einbettpresse 104.

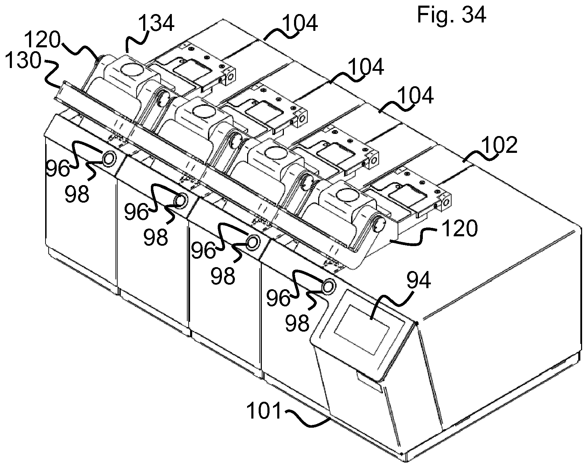

**Fig. 34** zeigt schließlich ein modulares Einbettpressensystem 106 mit einer internen Einbettpresse 102 sowie drei externen Einbettpressen 104, die jeweils von dem Basismodul 101 gesteuert und programmiert werden sowie von dem Basismodul 101 mit elektrischer Leistung versorgt werden. Die jeweiligen Einbettpressen 102, 104 können zueinander identisch ausgeführt sein. Aber die jeweiligen Einbettpressen 102, 104 können auch unterschiedlich hinsichtlich des Verschlusssystems 120 oder der Absaugeinrichtung 150 gestaltet sein. Es ist mit diesem System beispielsweise auch leicht möglich, in den Einbettpressen 102, 104 unterschiedliche Pressformen 63 vorzusehen, so dass verschiedene Einbettpressen 102, 104 für verschiedene Probendurchmesser eingesetzt werden können, ohne einen Wechsel der Pressform 63 vornehmen zu müssen.

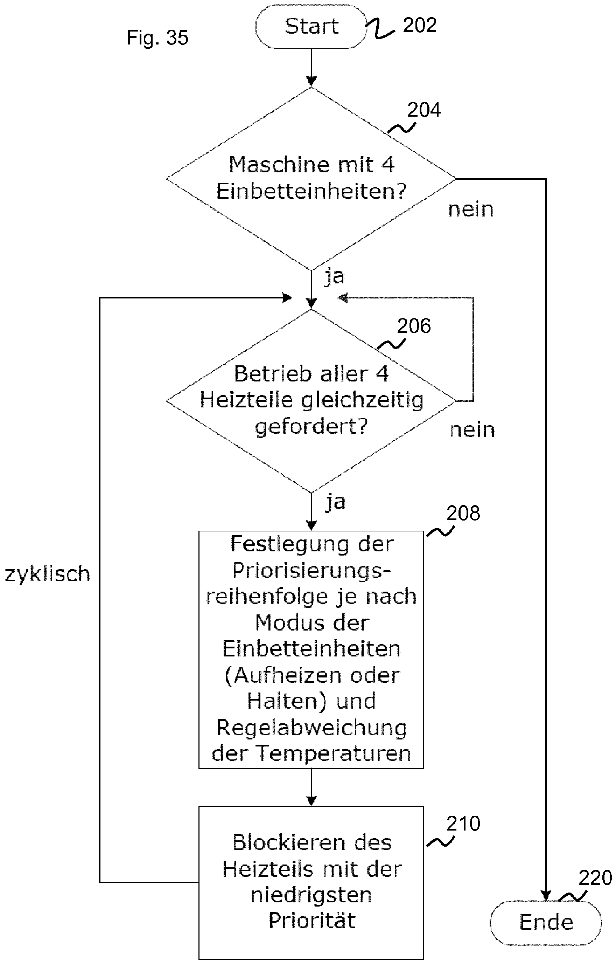

**Fig. 35** zeigt ein einfaches Ablaufschema für das modulare Einbettpressensystem 106. In einem ersten Schritt 202 startet ein Prozess. Beispielsweise kann Prozessstart bedeuten, dass eine oder mehrere Einbettpressen 102, 104 des modularen Einbettpressensystems 106 bereits in Betrieb sind und vom Anwender über die zentrale Eingabeeinrichtung 94 eine weitere Einbettpresse 102, 104 aktiviert wurde. Das Grundmodul 101 weist die zentrale Steuereinrichtung 92 auf, mittels welcher die Einbettpressen 102, 104 gesteuert werden. Die Steuereinrichtung 92 prüft nun im Schritt 204, beispielsweise anhand der vom Leistungsdistributor 91 zur Verfügung gestellten Daten, welche Anzahl von Einbettpressen 102, 104 von dem Grundmodul 101 mit elektrischer Leistung zu versorgen sind. In diesem Beispiel wird lediglich bei einem Betrieb von 4 oder mehr Einbetteinheiten 102, 104 eine Priorisierung hinsichtlich der Leistungsverteilung vorgenommen. Sind weniger als 4 Einbetteinheiten 102, 104 angeschlossen oder in Betrieb, braucht es in diesem Beispiel keine Priorisierung der Leistungsdistribution und das Ablaufschema springt zum Schritt 220 Ende. Dem Ablaufplan liegt die Idee zu Grunde, dass bei einem Parallelbetrieb von 3 oder weniger Einbetteinheiten ausreichend Leistung zum gleichzeitigen Vollbetrieb aller Einbetteinheiten 102, 104 zur Verfügung steht.

Wird die Abfrage nach 4 oder mehr Einbetteinheiten 102, 104 positiv beantwortet, so erfolgt die nächste Abfrage im Schritt 206, ob alle mindestens 4 Heizkühlteile 14 der mindestens 4 Einbetteinheiten 102, 104 mit Energie zu versorgen sind. Werden nicht alle Heizkühlteile 14 parallel betrieben, so kehrt der Ablaufplan in eine Schleife, in der regelmäßig der Zustand der Einbetteinheiten im Schritt 206 überprüft wird.

Werden jedoch mindestens 4 Heizkühlteile 14 parallel angefordert, so erfolgt im Schritt 208 eine Festlegung der Priorisierungsreihenfolge je nach Modus der Einbetteinheiten (Aufheizen oder Halten) und Regelabweichung der Temperaturen. Im Schritt 210 wird festgelegt, welche Leistungsverteilung vorgenommen werden soll, in diesem Beispiel ein Blockieren des Heizteils der Einbetteinheit 102, 104 mit der niedrigsten Priorität. Auch diese Abfrage erfolgt zyklisch, solange der konfliktbehaftete Parallelbetrieb von mehr als 3 Einbetteinheiten 102, 104 erfolgt.

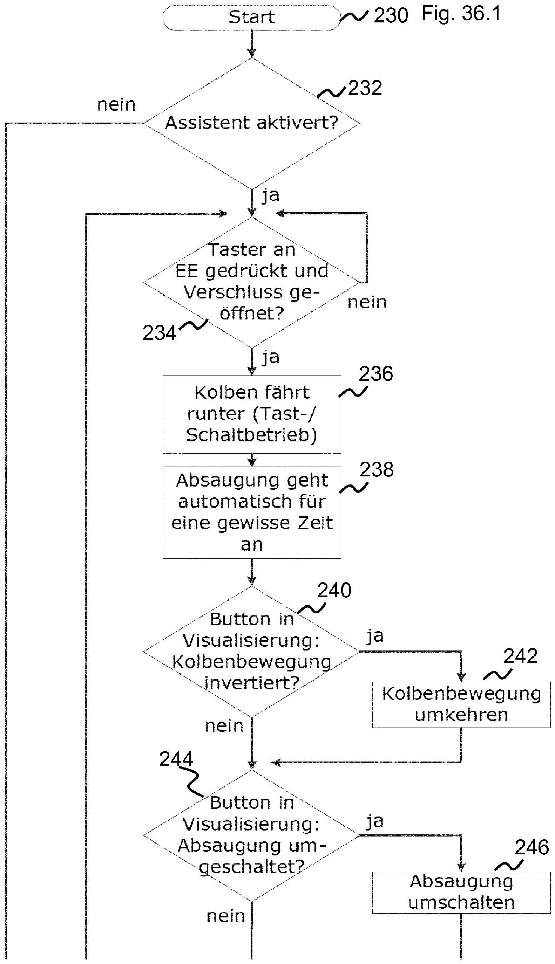

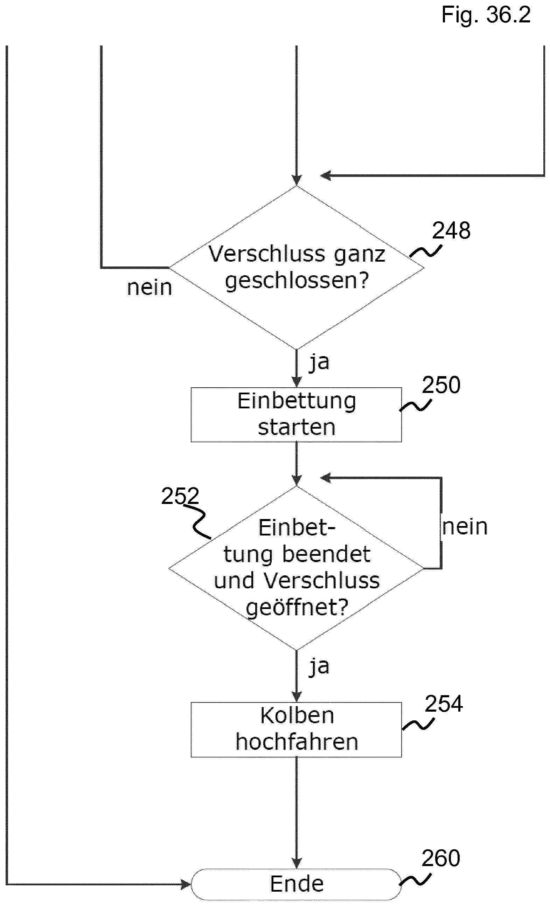

Bezug nehmend auf **Fig. 36** ist ein Ablaufschema für einen Befüllungsassistenten dargestellt. In einem Schritt 230 wird der Programmablauf gestartet und in Schritt 232 zunächst abgefragt, ob der Assistent aktiviert ist. Ist dies nicht der Fall, bricht das Ablaufschema ab und endet bei Schritt 260.

Sofern der Assistent aktiviert ist, erfolgt die Abfrage in Schritt 234, ob der Taster 96 an einer Einbetteinheit 102, 104 gedrückt wurde und ein Verschluss 120 geöffnet wurde. Mit anderen Worten erwartet der Assistent in Schritt 234 die Anwahl einer Einbetteinheit 102, 104, insbesondere mittels des Bedienknopfes 96 an der Einbetteinheit 102, 104, um mit dem weiteren Ablauf fortzufahren.

Auf Anforderung bzw. Anwahl einer Einbetteinheit 102, 104 wird im nächsten Schritt 236 der Kolben 23 der angewählten Einbetteinheit 102, 104 heruntergefahren (Tast-/Schaltbetrieb). In Schritt 238 wird die Absaugung an der ausgewählten Einbetteinheit 102, 104, oder die Zentralabsaugung 164, automatisch für eine vordefinierbare Zeitspanne aktiviert.

Mit Schritt 240 erfolgt eine Abfrage, ob in der Visualisierung der entsprechende Button bezüglich einer invertierten Kolbenbewegung aktiviert ist. Wird eine invertierte Kolbenbewegung gewünscht, so wird mit Schritt 242 die Kolbenbewegung umgekehrt.

Mit Schritt 244 erfolgt die Abfrage, ob eine Absaugumschaltung in der Visualisierung festgelegt wurde. Ist dies der Fall, wird mit Schritt 246 die Absaugung umgeschaltet.

Schließlich werden mit Schritt 248 die Positionssensoren (bzw. Lagesensoren) 30, 56, 80, 82 abgefragt hinsichtlich der Geschlossenstellung des Schiebeverschlusses 120 der angewählten Einbetteinheit 102, 104. Wird festgestellt, dass der Verschluss 120 vollständig geschlossen ist, so kann in Schritt 250 die Einbettung gestartet werden.

Nach Beendigung des Einbettvorgangs mit der ausgewählten Einbetteinheit 102, 104 wird in Schritt 252 abgefragt, ob der Verschluss geöffnet werden kann. Ist dies der Fall, wird in Schritt 254 der Kolben 23 hochgefahren und der Befüllungsassistent in Schritt 260 beendet.

Die vorliegende Erfindung ermöglicht eine komfortable, zügige und sichere Bedienung einer Einbettpresse 100, 102, 104 mit einer Absaugeinrichtung und die Verbesserung der Arbeitssicherheit durch die integrierte Absaugung von Stäuben und/oder Dämpfen einer Einbettpresse 100, 102, 104. So kann mit der vorliegenden Erfindung bei gleichbleibend gewährter Sicherheit eine Einbettpresse 100, 102, 104 mit der erfindungsgemäßen Absaugeinrichtung 150 komfortabler und zügiger bedient werden. Pausen bei der Bearbeitung für das Ablüften und das Verziehen von Staubwolken sind nicht länger nötig. Die Erfindung lässt sich auch mit einem Schiebeverschluss kombinieren und/oder in einem modularen Einbettpressensystem integrieren. So ermöglicht der Schiebeverschluss 120 einen bequemen Zugang zu dem im Schiebeverschluss 120 angeordneten Oberkolben 27, der beispielsweise leicht gereinigt oder gewechselt werden kann.

Es ist dem Fachmann ersichtlich, dass die vorstehend beschriebenen Ausführungsformen beispielhaft zu verstehen sind und die Erfindung nicht auf diese beschränkt ist, sondern in vielfältiger Weise variiert werden kann, ohne den Schutzbereich der Ansprüche zu verlassen. Ferner ist ersichtlich, dass die Merkmale unabhängig davon, ob sie in der Beschreibung, den Ansprüchen, den Figuren oder anderweitig offenbart sind, auch einzeln wesentliche Bestandteile der Erfindung definieren, selbst wenn sie zusammen mit anderen Merkmalen gemeinsam beschrieben sind. In allen Figuren stellen gleiche Bezugszeichen gleiche Gegenstände dar, so dass Beschreibungen von Gegenständen, die ggf. nur in einer oder jedenfalls nicht hinsichtlich aller Figuren erwähnt sind, auch auf diese Figuren übertragen werden können, hinsichtlich welchen der Gegenstand in der Beschreibung nicht explizit beschrieben ist.

### Bezugszeichenliste

- 1: Granulatfach
- 5: Exzenterverschluss
- 10: Zylinder oder Einbettzylinder oder Presszylinder
- 10a: Probenzylinder
- 10b: Druckzylinder
- 11: Zylinderöffnung
- 12: Zylinderachse
- 14: Heizkühlteil
- 16: Zylinderkopf
- 17: Zylinderboden
- 18: Kolben
- 19: Kolbenstange
- 23: Ober-Unterkolben
- 27: Oberkolben oder Presskolben
- 34: Schlauchleitung Kühlwasser
- 53: Zylinderrohr
- 55: Schlauchleitung bzw. Hochdruckschlauch
- 56: Erster Positionssensor bzw. Näherungseinrichtung
- 59: Schwenkplatte
- 60: Hebel
- 61: Abdeckplatte
- 63: Pressform
- 64: Schiebeführung
- 65: Schiebeverschluss
- 66: Exzenterbolzen
- 68: Absaugabdeckung
- 70: Hydrauliköffnung
- 72: Drehteil
- 73: Schwenkachse
- 74: Stützplatte
- 80: Verschlusshebelsensor
- 82: zweiter Verschlusshebelsensor
- 91: Leistungsdistributor
- 92: zentrale Steuereinrichtung
- 94: zentrale Eingabeeinrichtung
- 96: Bedienknopf
- 98: Anzeigeeinrichtung
- 100: Einbettpresse
- 101: Grundmodul
- 102: interne Einbettpresse
- 104: externe Einbettpresse
- 106: modulares Einbettpressensystem
- 108: Einbettpressenverbinder
- 110: zentraler Stromversorgungsanschluss
- 112: Kühlwasserzulauf
- 114: Kühlwasserrücklauf
- 116: Sammelschiene Kühlwasserzulauf
- 118: Sammelschiene Kühlwasserablauf
- 120: Schiebeverschluss
- 122: Schlittenführung
- 123: Führungszapfen
- 124: Bewegungsraum
- 128: Oberkolbenabdeckung
- 130: Verschlusshebel
- 132: Verschlusswelle
- 132a: abgeflachter Bereich d. Verschlusswelle
- 132b: abgeflachter Bereich d. Verschlusswelle
- 132c: Nocken
- 134: Schiebeschlitten
- 136: Schlittenträger
- 136': Abdeckung
- 142: Einkerbungen
- 144: flexibles Element bzw. Federelement
- 150: Absaugeinrichtung
- 152: Absaugöffnung
- 152': Trichter-Absaugöffnung
- 154: Schiebeschlittenkanal
- 156: Abauganschlusskanal
- 158: Absaugluftkanal
- 158': Trichter-Absaugluftkanal
- 160: Unterdruckerzeuger
- 162: Absaugfilter
- 164: Zentralabsaugung
- 170: Einfülltrichter
- 180: Granulat
- 202 bis 260: Verfahrensschritte

## Patentansprüche

1. Einbettpresse (100, 102, 104) für die Einbettung einer Probe umfassend:
einen Einbettzylinder (10, 10a) zur Aufnahme der Probe mit einer Hauptzylinderachse (12) und mit einer Zylinderöffnung (11), wobei die Hauptzylinderachse im Inneren des Einbettzylinders verläuft und durch die Zylinderöffnung hindurchtritt,
eine sich um die Zylinderöffnung herum erstreckende Abdeckung (136, 136')
eine Absaugeinrichtung (150) zur Absaugung beispielsweise von Granulatstaub, Granulat (180) oder Dämpfen,
wobei die Absaugeinrichtung einen Unterdruckerzeuger (160) zur Bereitstellung einer Absaugwirkung umfasst,
wobei die Absaugeinrichtung zumindest teilweise an der Abdeckung angebracht oder in die Abdeckung eingelassen ist.

2. Einbettpresse (100, 102, 104) nach dem vorstehenden Anspruch,
wobei die Abdeckung (136, 136') eine Abdeckplatte ist, in die die Zylinderöffnung (11) eingelassen ist, und/oder
wobei die Abdeckung eine Schlittenführung (122) für einen Schiebeschlitten (134) aufweist.

3. Einbettpresse (100, 102, 104) nach dem vorstehenden Anspruch,
wobei die Absaugeinrichtung (150) zumindest teilweise in den Schiebeschlitten (134) eingebaut ist bzw. wobei der abgesaugte Granulatstaub (180) und/oder Dämpfe durch den Schiebeschlitten hindurchgeleitet wird.

4. Einbettpresse (100, 102, 104) nach einem der vorstehenden Ansprüche,
wobei die Absaugeinrichtung (150) um die in die Abdeckplatte (136, 136') eingelassene Zylinderöffnung (11) herum angeordnete Absaugöffnungen (152) in der Abdeckplatte aufweist.

5. Einbettpresse (100, 102, 104) nach einem der vorstehenden Ansprüche,
ferner mit einer an der Einbettpresse angeordnetem Unterdruckerzeuger (160) zur Bereitstellung der Saugwirkung.

6. Einbettpresse (100, 102, 104) nach einem der vorstehenden Ansprüche,
ferner umfassend ein frontseitiges Granulatfach (1) zur Aufnahme von nicht absaugöffnungsgängigen Granulatresten (180), wobei insbesondere die Granulatreste von dem Schiebeschlitten (134) in das Granulatfach verbracht werden können, indem der Schiebeschlitten vor Einsatz der Einbettpresse auf die Zylinderöffnung (11) geschoben wird.

7. Absaugeinrichtung (150) für eine Einbettpresse (100, 102, 104), wobei die Einbettpresse einen Einbettzylinder (10), eine Zylinderöffnung (11) und eine durch den Einbettzylinder verlaufenden Hauptzylinderachse (12) aufweist, umfassend:
eine sich um die Zylinderöffnung herum erstreckende Abdeckung (136, 136')
einen Unterdruckerzeuger (160) zur Bereitstellung einer Absaugwirkung, insbesondere eine Gebläseeinrichtung,
zumindest ein mit dem Unterdruckerzeuger verbundener Absaugluftkanal (158),
zumindest eine mit dem Absaugluftkanal verbundene Absaugöffnung (152), die derart benachbart zu der Zylinderöffnung anordenbar ist, dass eine Absaugwirkung im Bereich der Zylinderöffnung erzielbar ist,
wobei die Absaugeinrichtung zumindest teilweise an der Abdeckung angebracht oder in die Abdeckung eingearbeitet ist.

8. Absaugeinrichtung (150) nach dem vorstehenden Anspruch,
wobei die Absaugeinrichtung hergerichtet ist, die Absaugwirkung unmittelbar im Bereich der Zylinderöffnung (11) des Einbettzylinders (10) zu entfalten.

9. Absaugeinrichtung (150) nach einem der vorstehenden Ansprüche,
wobei die zumindest eine Absaugöffnung (152) seitlich beabstandet von der Zylinderöffnung in (11) die Abdeckung (136, 136') eingelassen ist,
wobei die zumindest eine Absaugöffnung konzentrisch um die Zylinderöffnung in die Abdeckung eingelassen oder an der Abdeckung angebracht ist, und/oder
wobei die Abdeckung (136, 136') eine Abdeckplatte ist und eine Schlittenführung (122) für einen Schiebeschlitten (134) aufweist.

10. Absaugeinrichtung (150) nach einem der vorstehenden Ansprüche,
ferner umfassend einen Schiebeschlitten (134),
wobei die zumindest eine oder eine weitere Absaugöffnung (152) an dem Schiebeschlitten angeordnet ist und durch den Schiebeschlitten hindurch mit dem Absaugluftkanal verbunden ist.

11. Absaugeinrichtung (150) nach dem vorstehenden Anspruch,
wobei der Schiebeschlitten (134) zumindest einen Schiebeschlittenkanal (154) aufweist, der die zumindest eine Absaugöffnung (152) durch den Schiebeschlitten hindurch mit dem Absaugluftkanal (158) verbindet, und/oder
wobei der Schiebeschlitten eine Absaugposition aufweist, in welcher die zumindest eine Absaugöffnung in kommunizierender Weise durch den Schiebeschlitten hindurch von der Unterdruckeinrichtung (160) mit absaugendem Unterdruck beaufschlagt wird.

12. Absaugeinrichtung (150) nach einem der beiden vorstehenden Ansprüche,
wobei der Schiebeschlitten (134) eine Einsatzposition aufweist, in welcher der Schiebeschlitten die Zylinderöffnung (11) abdeckt und
wobei die Absaugeinrichtung eine Dampfabsaugung bereitstellt, um während des Pressvorgangs der Einbettpresse (100, 102, 104) entstehende Dämpfe abzusaugen.

13. Absaugeinrichtung (150) nach einem der vorstehenden Ansprüche,
wobei zumindest ein Teil des Absaugluftkanals (158) in die Abdeckplatte (136, 136') eingelassen ist, so dass der Absaugluftkanal durch die Abdeckplatte hindurchführt und/oder zumindest ein Stück durch die Abdeckplatte hindurchführt.

14. Absaugeinrichtung (150) nach einem der vorstehenden Ansprüche,
ferner umfassend ein bei dem Unterdruckerzeuger (160) angeordnetes Filterelement (162).

15. Absaugeinrichtung (150) nach einem der vorstehenden Ansprüche,
ferner umfassend zumindest eine weitere Einbettpresse (100, 102, 104) mit einer weiteren Zylinderöffnung (11),
wobei der Unterdruckerzeuger (160) ein gemeinsamer Unterdruckerzeuger ist,
wobei die Absaugeinrichtung hergerichtet ist, die Absaugwirkung unmittelbar im Bereich der Zylinderöffnung (11) des Einbettzylinders (20) und zugleich an der weiteren Zylinderöffnung der zumindest einen weiteren Einbettpresse zu entfalten.

## Claims

1. A mounting press (100, 102, 104) for mounting a sample, comprising:
a mounting cylinder (10, 10a) for receiving the sample, having a main cylinder axis (12) and a cylinder opening (11), with the main cylinder axis extending inside the mounting cylinder and out of the cylinder opening,
a covering (136, 136') extending around the cylinder opening,
a suction device (150) for extracting for example granular material dust, granular material (180), or vapor,
wherein the suction device comprises an underpressure generator (160) for providing a suction effect,
wherein the suction device is at least partly mounted on the covering or embedded in the covering.

2. The mounting press (100, 102, 104) according to the preceding claim,
wherein the covering (136, 136') is a covering plate with the cylinder opening (11) included therein, and/or
wherein the covering has a carriage guide (122) for a sliding carriage (134).

3. The mounting press (100, 102, 104) according to the preceding claim,
wherein the suction device (150) is at least partially integrated in the sliding carriage (134), or wherein the extracted granular material dust (180) and/or vapors are passed through the sliding carriage.

4. The mounting press (100, 102, 104) according to any of the preceding claims,
wherein the suction device (150) comprises suction openings (152) in the covering plate, which are arranged around the cylinder opening (11) included in the covering plate (136, 136').

5. The mounting press (100, 102, 104) according to any of the preceding claims,
further having an underpressure generator (160) arranged at the mounting press for providing the suction effect.

6. The mounting press (100, 102, 104) according to any of the preceding claims,
further comprising a front side granular material compartment (1) for receiving granular material residues (180) not fitting through the suction opening, in particular wherein the granular material residues can be conveyed into the granular material compartment by means of the sliding carriage (134) by sliding the sliding carriage onto the cylinder opening (11) prior to using the mounting press.

7. A suction device (150) for a mounting press (100, 102, 104), which mounting press comprises a mounting cylinder (10), a cylinder opening (11) and a main cylinder axis (12) extending through the mounting cylinder, comprising:
a covering (136, 136') extending around the cylinder opening,
an underpressure generator (160) for providing a suction effect, in particular a fan device,
at least one suction air passage (158) connected to the underpressure generator,
at least one suction opening (152) in communication with the suction air passage and arrangeable adjacent to the cylinder opening so as to allow to achieve a suction effect in the region of the cylinder opening,
wherein the suction device is at least partly mounted on the covering or embedded in the covering.

8. The suction device (150) according to the preceding claim,
wherein the suction device is adapted to unfold the suction effect directly in the region of the cylinder opening (11) of the mounting cylinder (10).

9. The suction device (150) according to any of the preceding claims,
wherein the at least one suction opening (152) is recessed in the covering (136, 136') laterally spaced apart from the cylinder opening (11),
wherein the at least one suction opening is recessed in the covering or provided on the covering concentrically around the cylinder opening, and/or
wherein the covering (136, 136') is a covering plate and has a carriage guide (122) for a sliding carriage (134).

10. The suction device (150) according to any of the preceding claims,
further comprising a sliding carriage (134),
wherein the at least one or a further suction opening (152) is arranged on the sliding carriage and is in communication with the suction air passage through the sliding carriage.

11. The suction device (150) according to the preceding claim,
wherein the sliding carriage (134) has at least one sliding carriage passage (154) extending through the sliding carriage so as to connect the at least one suction opening (152) to the suction air passage (158), and/or
wherein the sliding carriage has a suction position in which the at least one suction opening is in communication with the underpressure device (160) through the sliding carriage so as to be exposed to extracting underpressure thereby.

12. The suction device (150) according to any of the two preceding claims,
wherein the sliding carriage (134) has a position of use in which the sliding carriage covers the cylinder opening (11), and
wherein the suction device enables vapor extraction for sucking off vapors arising during the pressing operation of the mounting press (100, 102, 104).

13. The suction device (150) according to any of the preceding claims,
wherein at least a section of the suction air passage (158) is embedded in the covering plate (136, 136') so that the suction air passage extends through the covering plate and/or at least a section thereof extends through the covering plate.

14. The suction device (150) according to any of the preceding claims,
further comprising a filter element (162) disposed at the underpressure generator (160).

15. The suction device (150) according to any of the preceding claims,
further comprising at least one further mounting press (100, 102, 104) having a further cylinder opening (11),
wherein the underpressure generator (160) is a shared underpressure generator,
wherein the suction device is adapted to unfold the suction effect directly in the region of the cylinder opening (11) of the mounting cylinder (20) and at the same time at the further cylinder opening of the at least one further mounting press.

## Revendications

1. Presse d'enrobage (100, 102, 104) pour l'enrobage d'un échantillon, comprenant :
un cylindre d'enrobage (10, 10a) destiné à recevoir un échantillon avec un axe de cylindre principal (12) et avec une ouverture de cylindre (11), dans laquelle l'axe de cylindre principal s'étend à l'intérieur du cylindre d'enrobage et traverse l'ouverture de cylindre,
un recouvrement (136, 136') s'étendant tout autour de l'ouverture de cylindre,
un dispositif d'évacuation par aspiration (150) destiné à évacuer par aspiration par exemple de la poussière de granulés, des granulés (180) ou des vapeurs,
dans laquelle le dispositif d'évacuation par aspiration comprend un générateur de vide (160) destiné à fournir une action d'évacuation par aspiration,
dans laquelle le dispositif d'évacuation par aspiration est installé au moins en partie sur le recouvrement ou est introduit dans le recouvrement.

2. Presse d'enrobage (100, 102, 104) selon la revendication précédente,
dans laquelle le recouvrement (136, 136') est une plaque de recouvrement, dans laquelle l'ouverture de cylindre (11) est pratiquée, et/ou
dans laquelle le recouvrement présente un guide de chariot (122) pour un chariot coulissant (134).

3. Presse d'enrobage (100, 102, 104) selon la revendication précédente,
dans laquelle le dispositif d'évacuation par aspiration (150) est intégré au moins en partie dans le chariot coulissant (134), dans laquelle la poussière de granulés (180) évacuée par aspiration et/ou des vapeurs sont acheminées à travers le chariot coulissant de part en part.

4. Presse d'enrobage (100, 102, 104) selon l'une quelconque des revendications précédentes,
dans laquelle le dispositif d'évacuation par aspiration (150) présente dans la plaque de recouvrement des ouvertures d'évacuation par aspiration (152) disposées tout autour de l'ouverture de cylindre (11) pratiquée dans la plaque de recouvrement (136, 136').

5. Presse d'enrobage (100, 102, 104) selon l'une quelconque des revendications précédentes,
avec en outre un générateur de vide (160) disposé sur la presse d'enrobage, destiné à fournir l'action d'aspiration.

6. Presse d'enrobage (100, 102, 104) selon l'une quelconque des revendications précédentes,
comprenant en outre un compartiment de granulés (1) côté frontal destiné à recevoir des résidus de granulés (180) ne traversant pas l'ouverture d'évacuation par aspiration, dans laquelle en particulier les résidus de granulés peuvent être amenés dans le compartiment de granulés par le chariot coulissant (134) en ce que le chariot coulissant est coulissé sur l'ouverture de cylindre (11) avant l'utilisation de la presse d'enrobage.

7. Dispositif d'évacuation par aspiration (150) pour une presse d'enrobage (100, 102, 104), dans lequel la presse d'enrobage présente un cylindre d'enrobage (10), une ouverture de cylindre (11) et un axe de cylindre principal (12) s'étendant à travers le cylindre d'enrobage, comprenant :
un recouvrement (136, 136') s'étendant tout autour de l'ouverture de cylindre,
un générateur de vide (160) destiné à fournir une action d'évacuation par aspiration, en particulier un dispositif de soufflante,
au moins un canal d'air d'évacuation par aspiration (158) relié au générateur de vide,
au moins une ouverture d'évacuation par aspiration (152) reliée au canal d'évacuation par aspiration, qui peut être disposée de manière adjacente à l'ouverture de cylindre de telle manière qu'une action d'évacuation par aspiration peut être obtenue dans la zone de l'ouverture de cylindre,
dans lequel le dispositif d'évacuation par aspiration est installé au moins en partie sur le recouvrement ou est inséré dans le recouvrement.

8. Dispositif d'évacuation par aspiration (150) selon la revendication précédente,
dans lequel le dispositif d'évacuation par aspiration est mis au point pour déployer l'action d'évacuation par aspiration directement dans la zone de l'ouverture de cylindre (11) du cylindre d'enrobage (10).

9. Dispositif d'évacuation par aspiration (150) selon l'une quelconque des revendications précédentes,
dans lequel l'au moins une ouverture d'évacuation par aspiration (152) est pratiquée à distance latéralement de l'ouverture de cylindre (11) dans le recouvrement (136, 136'),
dans lequel l'au moins une ouverture d'évacuation par aspiration est pratiquée dans le recouvrement de manière concentrique autour de l'ouverture de cylindre ou est installée sur le recouvrement, et/ou
dans lequel le recouvrement (136, 136') est une plaque de recouvrement et présente un guide de chariot (122) pour un chariot coulissant (134).

10. Dispositif d'évacuation par aspiration (150) selon l'une quelconque des revendications précédentes,
comprenant en outre un chariot coulissant (134),
dans lequel l'au moins une ou une autre ouverture d'évacuation par aspiration (152) est disposée sur le chariot coulissant et est reliée au canal d'air d'évacuation par aspiration à travers le chariot coulissant de part en part.

11. Dispositif d'évacuation par aspiration (150) selon la revendication précédente,
dans lequel le chariot coulissant (134) présente au moins un canal de chariot coulissant (154), qui relie l'au moins une ouverture d'évacuation par aspiration (152) à travers le chariot coulissant de part en part au canal d'air d'évacuation par aspiration (158), et/ou
dans lequel le chariot coulissant présente une position d'évacuation par aspiration, dans laquelle l'au moins une ouverture d'évacuation par aspiration est soumise à l'action d'un vide d'évacuation par aspiration par le dispositif de vide (160) de manière communicante à travers le chariot coulissant de part en part.

12. Dispositif d'évacuation pas aspiration (150) selon l'une des deux revendications précédentes,
dans lequel le chariot coulissant (134) présente une position d'utilisation, dans laquelle le chariot coulissant recouvre l'ouverture de cylindre (11), et
dans lequel le dispositif d'évacuation par aspiration fournit une aspiration par évacuation de vapeur pour évacuer par aspiration des vapeurs se formant pendant le processus d'enrobage de la presse d'enrobage (100, 102, 104).

13. Dispositif d'évacuation par aspiration (150) selon l'une quelconque des revendications précédentes,
dans lequel au moins une partie du canal d'air d'évacuation par aspiration (158) est pratiquée dans la plaque de recouvrement (136, 136') de telle sorte que le canal d'air d'évacuation par aspiration mène à travers la plaque de recouvrement de part en part, et/ou mène au moins une pièce à travers la plaque de recouvrement de part en part.

14. Dispositif d'évacuation par aspiration (150) selon l'une quelconque des revendications précédentes,
comprenant en outre un élément de filtre (162) disposé à proximité du générateur de vide (160).

15. Dispositif d'évacuation par aspiration (150) selon l'une quelconque des revendications précédentes,
comprenant en outre au moins une autre presse d'enrobage (100, 102, 104) avec une autre ouverture de cylindre (11),
dans lequel le générateur de vide (160) est un générateur de vide commun,
dans lequel le dispositif d'évacuation par aspiration est mis au point pour déployer l'action d'évacuation par aspiration directement dans la zone de l'ouverture de cylindre (11) du cylindre d'enrobage (20) et dans le même temps sur l'autre ouverture de cylindre de l'au moins une autre presse d'enrobage.
